# EUROPÄISCHE PATENTSCHRIFT

(11) **EP 3 094 498 B1**
(45) Veröffentlichungstag und Bekanntmachung des Hinweises auf die Patenterteilung: **17.04.2024**
(21) Anmeldenummer: 15705484.2
(22) Anmeldetag: 14.01.2015
(51) Int. Cl.: B60B 3/04, B60B 3/10, B60B 5/02, B60B 21/12, B60B 23/08, B60B 23/06, B60B 1/14

(54) **FAHRZEUGRAD MIT EINER VERBINDUNG EINER RADFELGE MIT FELGENBETT AUS FASERVERBUNDWERKSTOFF UND EINER RADSCHEIBE**
VEHICLE WHEEL HAVING A COMBINATION OF A WHEEL RIM WITH RIM WELL MADE FROM FIBRE COMPOSITE MATERIAL AND A WHEEL DISC
ROUE DE VÉHICULE COMPRENANT UNE LIAISON ENTRE UNE JANTE PRÉSENTANT UN CREUX DE JANTE EN MATÉRIAU RENFORCÉ PAR DES FIBRES ET UN DISQUE DE ROUE

(30) Priorität: 15.01.2014 DE 102014100428
(43) Veröffentlichungstag der Anmeldung: 23.11.2016
(73) Patentinhaber: Action Composites GmbH, 4910 Ried im Innkreis (AT)
(72) Erfinder: WERNER, Jens, 01640 Coswig (DE); KÖHLER, Christian, 01099 Dresden (DE); BARTSCH, André, 01159 Dresden (DE); DRESSLER, Michael, 01159 Dresden (DE); MÄKE, Sandro, 01796 Dohma (DE); HEILMANN, Christian, 01097 Dresden (DE); FRANKE, Florian, 01159 Dresden (DE)
(74) Vertreter: Kailuweit & Uhlemann Patentanwälte Partnerschaft mbB
(86) Internationale Anmeldenummer: PCT/DE2015/100019
(87) Internationale Veröffentlichungsnummer: WO 2015/106760

(56) Entgegenhaltungen:
- EP-B1- 1 858 715
- EP-B1- 1 858 715
- WO-A1-2010/067383
- WO-A1-2010/067383
- DE-A1-102006 039 686
- DE-U1- 8 901 696
- US-A- 3 286 757
- US-A- 3 346 301
- US-A- 3 346 301
- US-A- 4 150 854
- US-A- 4 150 854
- US-A- 4 518 204
- US-A- 4 518 204
- US-A- 6 019 149
- US-A- 6 019 149

## Beschreibung

Die Erfindung betrifft ein Fahrzeugrad, das eine Radfelge mit einem Felgenbett aus Faserverbundwerkstoff und eine Radscheibe aufweist, wobei die Radscheibe mittels wenigstens eines Verbindungselements mit der Radfelge verbunden ist, welches durch einen Durchgang des Felgenbetts geführt und in der Radscheibe aufgenommen ist.

Die Radscheibe kann eine schüsselförmige, geschlossene oder eine sternförmige offene Struktur aufweisen.

Eine Vorrichtung dieser Art ist aus der Druckschrift EP 1 858 715 B1 bekannt. Bei diesem Fahrzeugrad ist eine sternförmige Radscheibe (Radstern) mittels mehrerer Verbindungselemente, die Schrauben oder Nieten sein können und durch jeweils ein Durchgangsloch im Felgenbett führen, mit der Felge verbunden. Die das Felgenbett durchdringende Verbindung ist von der Felgeninnenseite nicht sichtbar. Zur Abdichtung gegen den Druckraum (Reifenkammer) der Felge ist eine Dichtung, vornehmlich eine Dichtmasse, zwischen dem Verbindungselement und dem Felgenbett bzw. im Durchgangsloch des Felgenbetts vorgesehen.

Der Radstern und das Verbindungselement schließen unmittelbar an das Felgenbett an, was bei den häufigsten Materialpaarungen und unter der dynamischen Belastung während des Betriebs des Fahrzeugrades Schwingreibverschleiß am Material des Felgenbetts hervorruft. Aufgrund der unterschiedlichen Steifigkeitsverhältnisse von Verbindungselement, Radstern und Felgenbett sind während des Betriebes zueinander intensive Relativbewegungen zu erwarten.

In Folge dessen ergeben sich Probleme bei der Dichtigkeit der Verbindung, weil die unterschiedlichen Steifigkeitsverhältnisse und Mikrobewegungen der Bauteile die Dichtwirkung der Verbindung unter der Dauerbelastung erheblich mindern. Bei Verformungen des Radsterns, wie z.B. durch Bordstein-Überfahrten und Schlagloch-Durchfahrten, werden besonders hohe Kräfte auf die Verbindung und die Dichtung übertragen, die die Undichtigkeiten weiter fördern. Das Verbindungselement und die Dichtmasse stehen mit dem Druckraum (Reifenkammer) der Felge in Verbindung, so dass jede Undichtigkeit unweigerlich zum Druckverlust im Reifen führt und damit eine Unfallgefahr bedeutet.

Nachteilig ist zudem, dass die insbesondere zähelastische Beschaffenheit der Dichtung unter der Flächenpressung und den Mikrobewegungen zu starkem Kriechen neigt und dadurch die Tragfähigkeit der Verbindung mindert, was dazu führen kann, dass die Verbindung sich lockert oder sogar löst.

Die Druckschrift US 4,150,854 A beschreibt ein Dichtungssystem für ein Speichenrad aus Metall gegenüber der Luftkammer (Reifenkammer). Die Speichen sind mittels mit Befestigungselemente mit der Felge verbunden, die durch Öffnungen im Tiefbett der Felge dringen. Zur Abdichtung der Öffnungen der Felge gegenüber der Luftkammer ist ein Dichtungselement vorgesehen, das aus einem thermoplastischem Schmelzkleber besteht, der mit einer Dicke von ¼ bis 1/2 inch (6,5 bis 13 mm) umlaufend auf das Tiefbett der Felge aufgebracht wird und dabei mit der Felge und den Kopfteilen der Befestigungselemente verklebt wird.

Dieses Dichtungselement befindet sich außerhalb der Durchgangsöffnungen der Befestigungselemente ist jedoch ebenfalls unmittelbar und steif mit den Befestigungselementen verbunden, was zu den vorstehend angeführten Nachteilen der mechanischen Dauerbelastung der Dichtung unter den dynamischen Mikrobewegungen der Verbindungsteile während des Betriebs des Fahrzeugrades führt - mit der Folge der Minderung der Dichtwirkung.

Die Druckschrift DE 8901696 U1 beschreibt ein schlauchloses Speichenrad aus Metall gleicher Art, mit einem radial umlaufenden elastischen Abdeckband als Dichtung, das zur Abdichtung der Speichendurchführungen die Speichenbefestigungen (Speichennippel) im Tiefbett der Felge überspannt und randseitig mit einer Siliconschicht abgedichtet ist.

Im Betrieb des Fahrzeugrades führt der Druck in der Reifenkammer dazu, dass das elastische Abdeckband an die Speichennippel angedrückt wird und ebenfalls vorstehend angeführte Nachteile bewirkt.

Der Erfindung liegt die Aufgabe zugrunde, die Nachteile des Fahrzeugrades nach dem Stand der Technik zu beseitigen und insbesondere eine zuverlässige und betriebssichere Verbindung der Radfelge mit der Radscheibe bereitzustellen.

Die Aufgabe wird erfindungsgemäß dadurch gelöst, dass die Radfelge zur Verbindung mit der Radscheibe wenigstens eine Verbindungsanordnung mit wenigstens einem Verbindungselement und zur Dichtung gegenüber der Reifenkammer ein Dichtungselement aufweist, das einen über die Felgenaußenseite erstreckten Teil einer oder mehrerer benachbarter Verbindungsanordnungen vollständig und hohl überdeckt und ein umlaufender Rand des Dichtungselements luftdicht mit dem Felgenbett verklebt ist, wobei das Dichtungselement derart formbeständig ausgebildet ist, dass es unter Einwirkung des Druckes der Reifenkammer seine Geometrie im Wesentlichen beibehält.

Das erfindungsgemäße Dichtungselement überdeckt und umfasst komplett den an der Felgenaußenseite der Radfelge am Felgenbett anliegenden oder felgenaußenseitig im Felgenbett einliegenden Teil der Verbindungsanordnung, wobei das überdeckende Dichtungselement mit einer definierten, beständigen Geometrie einen Hohlraum über dem felgenaußenseitig erstreckten Teil der Verbindungsanordnung bildet und lediglich ein Rand des Dichtungselements mit dem Felgenbett verklebt ist. Das Dichtungselement ist derart formbeständig ausgebildet oder abgestützt, dass es unter der Einwirkung des Druckes der Reifenkammer im Wesentlichen seine Geometrie beibehält.

Das Verbindungselement der Verbindungsanordnung kann beispielsweise eine das Felgenbett durchdringende Schraube oder durchdringender Niet sein, demgemäß der über die Felgenaußenseite erstreckter Teil der Verbindungsanordnung ein Schrauben- bzw. Nietkopf sein kann.

Die Verbindungsanordnung kann mehrere kombinierte Verbindungselemente und weitere Elemente der Verbindung, wie beispielsweise Buchsenteile oder eine Unterlegscheibe unter dem Schraubenkopf, umfassen, wonach auch diese Elemente der Verbindung einem über die Felgenaußenseite erstreckten Teil der Verbindungsanordnung aufweisen können, welcher erfindungsgemäß vollständig vom Dichtungselement überdeckt und eingefasst wird.

Die Felgenaußenseite ist die der Radscheibe abgewandte Seite der Felge.

In einem Randbereich um den an der Felgenaußenseite erstreckten Teil der Verbindungsanordnung liegt der umlaufende Rand des Dichtungselements am Felgenbett an und ist mit diesem verklebt, womit das das Dichtungselement unmittelbar gegen das Felgenbett abdichtet. Die Abdichtung kann z.B. durch eine Verklebung der Randinnenfläche des Dichtungselements mit dem Felgenbett und / oder durch eine Verklebung der Randaußenfläche mit dem Felgenbett, beispielsweise durch einen auf das Felgenbett reichenden, überlappenden Überzug des Randes oder des gesamten Dichtungselements mit einer klebenden, dichtenden Schicht. In jedem Fall ist die unmittelbare oder mittelbare Verklebung des Dichtungselements mit dem Felgenbett von der mechanisch belasteten Verbindungsanordnung entkoppelt und gewährleistet eine sichere und beständige Dichtwirkung.

Damit wird die auf der Felgenaußenseite befindliche druckbeaufschlagte Reifenkammer der Radfelge vollständig gegen die Verbindungsanordnung einschließlich des den Durchgang durchdringenden Verbindungselements abgedichtet und von der Außenatmosphäre getrennt.

Sind zur Verbindung der Radfelge mit beispielsweise einer sternförmigen Radscheibe mehrere Verbindungsanordnungen in einer Gruppe benachbart angeordnet, kann das Dichtungselement die über die Felgenaußenseite erstreckten Teile dieser gruppierten Verbindungsanordnungen hohl liegend überdecken und einfassen. In vorstehend beschriebener Weise können die gruppiert angeordneten Verbindungsanordnungen in ihrer Gesamtheit material- und raumsparend mit einem einzigen Dichtungselement abgedichtet werden.

Die Erfindung geht davon aus, dass der hauptsächliche Kraftfluss zur Übertragung der Kräfte von der Radscheibe in die Radfelge über den unmittelbaren Reibschluss zwischen der Radscheibe, dem Verbindungselement und weiteren kraftschlüssig eingebunden Teilen der Verbindung und dem Felgenbett erfolgt.

Bei der erfindungsgemäßen Anordnung und Ausführung der Dichtung befindet sich das für die Dichtigkeit der kraftschlüssigen Verbindungsanordnung erforderliche Dichtungselement außerhalb dieses Kraftflusses. Das Dichtungselement ist somit von der Flächenpressung des Verbindungselements gegen das Felgenbett ausgenommen und von den Relativbewegungen der mechanischen Verbindung zwischen der Verbindungsanordnung, dem Felgenbett und dem Radstern im Betrieb des Fahrzeugrades entkoppelt.

Das Material des Dichtungselements ist damit vor Kriecherscheinungen und Verschleiß unter der mechanischen Beanspruchung der kraftschlüssigen Verbindungsanordnung geschützt. Das Dichtungselement behält dauerhaft seine Dichtwirkung.

Die Radfelge des Fahrzeugrades muss Überdrücken in der Reifenkammer von bis zu 8 bar standhalten. Dementsprechend bestehen hohe Anforderungen an die Luftdichtigkeit des Felgenbetts aus Faserverbundmaterial und der das Felgenbett durchdringenden Verbindung, die mit der erfindungsgemäßen formbeständigen Ausführung und eigenständigen Anordnung des überdeckenden Dichtungselements auf dem Felgenbett bestens erfüllt sind.

Mit der erfindungsgemäßen Anordnung und Ausführung des Dichtungselements wird zusätzlich eine selbstdichtende Wirkung der Verbindungsanordnung erreicht. Je mehr Druck von der druckbeaufschlagten Reifenkammer der Radfelge ausgeht, umso besser wird die Pressung des Dichtungselements gegen das Felgenbett und damit dessen Dichtwirkung.

Auch bei Mißbrauchslasten, die mit der Beschädigung des Verbindungselements oder anderen Teilen der Verbindungsanordnung oder einem Bruch von Speichenteilen der Radscheibe einhergehen, bleibt die Dichtungswirkung erhalten. Unfallgefahren durch plötzlichen Druckabfall über die Verbindungsanordnung sind damit weitestgehend beseitigt.

Im Ergebnis wird eine besonders zuverlässige und betriebssichere Verbindungsanordnung mit einer funktionssicheren Dichtung erzielt.

Die Aufgabe wird erfindungsgemäß auch dadurch gelöst, dass die Radfelge wenigstens eine Verbindungsanordnung mit wenigstens einem Verbindungselement sowie eine flexible Dichtungsschicht aus zähelastischem Kunststoff aufweist, die mittels Beschichtung einen über die Felgenaußenseite des Felgenbetts erstreckten Teil einer oder mehrerer benachbarter Verbindungsanordnungen vollständig abdeckt und ein Randbereich der flexiblen Dichtungsschicht luftdicht mit dem Felgenbett verbunden ist.

Die flexible Dichtungsschicht ist eine gummiartige Schicht mit einer ausgeprägten Schichtdicke aus elastischem Material, insbesondere aus zähelastischem Kunststoff, wie z.B. in Form einer dicken Lackschicht, die zumindest partiell im Bereich des die Felgenaußenseite des Felgenbetts erstreckten Teils der Verbindungsanordnung aufgebracht ist und diesen vollständig abdeckt. Ein Randbereich der flexiblen Dichtungsschicht überlappt den über die Felgenaußenseite des Felgenbetts erstreckten Teils der Verbindungsanordnung und ist mit dem umgebenden Felgenbett dichtend verbunden.

Die flexible Dichtungsschicht kann auch mehrere über die Felgenaußenseite erstreckte Teile gruppierter Verbindungsanordnungen gemeinsam abdecken und im Verbund abdichten, was technologische Erleichterungen und große Dichtflächen für eine besonders sichere Dichtung bietet.

Diese Ausführungsform der Erfindung ist einfach herstellbar und eignet sich insbesondere bei Radkonstruktionen mit einer geringen Ausprägung der Mikrobewegungen in der Verbindungsanordnung, die von der gummiartigen Schicht gut aufgenommen und kompensiert werden können.

Auch mit dieser Lösung sind die vorbeschriebenen Vorzüge verbunden und es wird eine besonders zuverlässige und betriebssichere Verbindungsanordnung mit einer funktionssicheren Dichtung erzielt.

Vorteilhafte Ausgestaltungen und Weiterbildungen der Erfindung gehen aus den abhängigen Patentansprüchen, der nachfolgenden Beschreibung und den zugehörigen Zeichnungen hervor.

Eine vorteilhafte Ausführung sieht vor, dass der Rand des Dichtungselements oder der Randbereich der flexiblen Dichtungsschicht mit einer das Felgenbett dichtenden Schicht aus vorzugsweise zähelastischem Kunststoff verklebt ist. Das Dichtungselement oder die flexible Dichtungsschicht schließt in einem Randbereich um den auf der Felgenaußenseite des Felgenbetts erstreckten Teil der Verbindungsanordnung an eine klebende und dichtende Versiegelungsschicht des Felgenbetts an, welche häufig zur Erhöhung der Dichtigkeit des Felgenbetts aus Faserverbundmaterial auf der Felgenaußenseite des Felgenbetts aus Faserverbundwerkstoff aufgebracht wird. Die Verklebung des Randbereichs des Dichtungselements bzw. der flexiblen Dichtungsschicht kann überlappend oder direkt mit dem Felgenbett erfolgen, wobei auch hier die Abdichtung von der mechanisch belasteten Verbindungsanordnung entkoppelt ist und eine sichere und beständige Dichtwirkung gewährleistet.

Eine weitere vorteilhafte Ausführung sieht vor, dass das Dichtungselement oder die flexible Dichtungsschicht mit einer das Felgenbett dichtenden Schicht aus vorzugsweise zähelastischem Kunststoff vollständig bedeckt ist.

Hierbei bedarf es keiner expliziten Verklebung der Dichtungselemente bzw. der flexiblen Dichtungsschichten im Randbereich um den auf der Felgenaußenseite erstrecktem Teil der Verbindungsanordnung mit dem Felgenbett. Die Dichtungselemente oder die partiell aufgebrachten flexiblen Dichtungsschichten werden unter Verwendung der auf der Felgenaußenseite des Felgenbetts vorgesehenen luftdichten Versiegelungsschicht fixiert und zugleich gegen das Felgenbett abgedichtet, wobei sich eine geschlossen-flächige Dichtebene über das gesamte Felgenbett ausbildet. Die Versiegelungsschicht aus vorzugsweise einem zähelastischen Kunststoff verfügt über besonders gute Klebe- und Dichtungseigenschaften und ist daher für die Verklebung im Randbereich des Dichtungselements oder der flexiblen Dichtungsschicht gut geeignet. Diese Ausführung erspart den Fertigungsschritt der separaten, dichtenden Verklebungen der einzelnen Dichtungselemente oder flexiblen Dichtungsschichten mit dem Felgenbett.

Vorteilhafter Weise ist die flexible Dichtungsschicht zugleich eine das Felgenbett dichtende Schicht. Mit dieser Ausführung ist die flexible Dichtungsschicht über der Verbindungsanordnung fertigungs- und kostengünstig in die ohnehin häufig auf der Felgenaußenseite des Felgenbetts aus Faserverbundwerkstoff vorgesehene Versiegelungsschicht integriert. Der verwendete Versiegelungslack kann partiell im Bereich des die Felgenaußenseite des Felgenbetts erstreckten Teils der Verbindungsanordnung mit einer entsprechend ausgeprägten Schichtdicke ausgebildet werden, womit er besonders zähelastische Eigenschaften aufweist und daher auch gut als flexible Dichtungsschicht geeignet ist.

Nach einer besonders vorteilhaften Ausgestaltung weist die Verbindungsanordnung wenigstens ein Buchsenteil auf, in welchem das Verbindungselement geführt ist. Durch die Verwendung eines, vorzugsweise metallischen oder keramischen, Buchsenteils, welches den Durchgang durch das Felgenbett aus Faserverbundwerkstoff zumindest teilweise einfasst, wird der Schwingreibverschleiß zwischen dem Verbindungselement und der Faserstruktur des Felgenbetts nachhaltig gemindert und die Betriebssicherheit der Verbindung weiter verbessert.

Die Erfindung geht hierbei davon aus, dass bei den das Felgenbett durchdringenden Verbindungsanordnungen nach dem Stand der Technik die Verwendung von Buchsen in Bezug auf die Qualitätssicherung der Dichtigkeit besonders schwierig ist. So ist die Druckdichtigkeit zwischen den bewegten Teilen, wie den Buchsenteilen und dem Verbindungselement, sowie gegen das Felgenbett sehr kompliziert und aufwändig herzustellen. Diese notwendigen Mehrfachabdichtungen haben die Ausführung der Verbindung der Radfelge mit der Radscheibe mittels Buchsensystemen schon aus Kostengründen gehemmt. Es ergibt sich zudem eine hohe Störanfälligkeit der notwendigen Mehrfachdichtungen, insbesondere wenn gewöhnlich mehrere Verbindungen zur Befestigung der Radscheibe vorgesehen sind.

Die erfindungsgemäße Anordnung und Ausführung des Dichtungselements bzw. der flexiblen Dichtungsschicht in Bezug zur Verbindungsanordnung löst diese Probleme. Durch das die Verbindungsanordnung ganzheitlich auf der Felgenaußenseite überdeckende Dichtungselement bzw. durch die flexible Dichtungsschicht wird eine vollkommene Abdichtung der Verbindungsanordnung einschließlich der Buchse(n) gegen den Luftdruck der Reifenkammer und dem Felgenbett erreicht und es erübrigen sich kostenintensive Abdichtungen der Buchsenteile gegeneinander, gegen das Verbindungselement und gegen das Felgenbett. Unterdessen wird eine beständige und funktionssichere Druckdichtigkeit der gesamten Verbindungsanordnung erreicht. Es steht eine kostengünstige, sichere Verbindung unter geminderten Schwingreibverschleiß bei zugleich zuverlässiger Dichtheit zur Verfügung.

Vorteilhafter Weise weist ein äußeres Buchsenteil der Verbindungsanordnung einen über die Felgenaußenseite erstreckten Bundkragen auf.

Der an der Felgenaußenseite anliegende Bundkragen verbessert die Krafteinleitung und Verteilung der Flächenpressung des Verbindungselements mit dem Felgenbett aus Faserverbundwerkstoff und bietet somit einen höheren Schutz der Faserstruktur des Felgenbetts unter der Dauerbelastung der mechanischen Verbindung.

Das Dichtungselement bzw. die flexible Dichtungsschicht ist in diesem Fall im Randbereich um den an der Felgenaußenseite anliegenden Bundkragen luftdicht mit dem Felgenbett verbunden.

In diesem Zusammenhang ist es weiter vorteilhaft, wenn das äu-ßere Buchsenteil oder der Bundkragen eine korrespondierende Anlagefläche für den Sitz des Verbindungselements bzw. des über die Felgenaußenseite erstreckten Teils des Verbindungselements aufweist, womit eine besonders gute Führung des Verbindungselements und eine homogene Verteilung der in das Felgenbett eingeleiteten Kräfte zur Verfügung gestellt ist.

Gemäß einer vorteilhaften Ausführungsform der Erfindung ist vorgesehen , dass der über die Felgenaußenseite erstreckte Teil des Verbindungselements, wie zum Beispiel der Kopf des Verbindungselements, und/oder das äußere Buchsenteil und/oder dessen Bundkragen in einer Ausnehmung der Felgenaußenseite des Felgenbetts angeordnet ist.

Die Ausnehmung kann zumindest eine flache, plane Ausfräsung einer gekrümmten Oberfläche der Felgenaußenseite im Bereich des über die Felgenaußenseite erstreckten Teils der Verbindungsanordnung sein, welche für eine verbesserte Anlage der felgenaußenseitigen Teile der Verbindungsanordnung auf der Oberfläche des Felgenbetts sorgt.

Mit einer entsprechend ausgebildeten Ausnehmung kann des Weiteren der über die Felgenaußenseite erstreckte Teil der Verbindungsanordnung entweder mit einem besonders flachen Überstand über der Oberfläche der Felgenaußenseite ausgebildet sein oder bündig mit der Oberfläche der Felgenaußenseite abschließen oder sogar eine Vertiefung gegenüber der Oberfläche der Felgenaußenseite bilden.

Eine versenkte Anordnung der Verbindungsanordnung ermöglicht es, das überdeckende Dichtungselement weitestgehend flach, ohne wesentliche Erhebung gegenüber der Felgenaußenseite auszubilden, wobei dennoch die hohl liegende Abdeckung des über die Felgenaußenseite erstreckten Teils der Verbindungsanordnung gewahrt bleiben kann. Die flache Ausführung des Dichtungselements über der versenkten Verbindungsanordnung erleichtert die Reifenmontage auf der Radfelge, bei der der Reifen über die Kontur des Felgenbetts bzw. der Felgenaußenseite und der Dichtungselemente zum Reifensitz gezogen werden muss. Diese Dichtungsausführung vermindert geometrische Behinderungen beim Aufziehen des Reifens auf das Felgenbett.

Bei einer weiteren vorteilhaften Ausführungsform ist auch das überdeckende Dichtungselement in einer Ausnehmung der Felgenaußenseite des Felgenbetts angeordnet.

Die Ausnehmung kann zumindest eine flache, plane Ausfräsung einer gekrümmten Oberfläche der Felgenaußenseite im Bereich des Randes des überdeckenden Dichtungselements sein, um für eine plane Anlage des umlaufenden Randes des Dichtungselements am Felgenbett zu sorgen, was die Sicherheit der Dichtigkeit des Dichtungselements zum Felgenbett erhöht.

Darüber hinaus kann die Ausnehmung gerade so ausgebildet sein, dass das darin angeordnete Dichtungselement weitestgehend flach, ohne wesentliche Erhebung gegenüber der Felgenaußenseite oder insbesondere bündig mit der Oberfläche der Felgenaußenseite positioniert ist, so dass die Kontur des Dichtungselements der Kontur des Felgenbetts folgt.

Mit insbesondere der bündigen Ausführung können geometrische Hindernisse sowie auch Spaltbildungen zwischen dem Reifen und dem Felgenbett beim druckbelasteten Aufziehen des Reifens auf das Felgenbett gänzlich vermieden werden.

Bei einer besonders vorteilhaften Ausführungsform der Erfindung ist vorgesehen, dass das Dichtungselement kappenförmig als eine flache Dichtkappe ausgebildet ist. Die Dichtkappe in passender Abmessung bietet einen entsprechenden Hohlraum für die kontaktlose Überdeckung des über die Felgenaußenseite des Felgenbetts erstreckten Teils der Verbindungsanordnung. Die gewölbte Dichtkappe kann einfach über den über die Felgenaußenseite des Felgenbetts erstreckten Teil der Verbindungsanordnung übergestülpt werden und randseitig mit dem Felgenbett verklebt werden. Die Ausführung erleichtert die Herstellung einer sicheren und stabilen Abdichtung der Verbindungsanordnung. Die kappenförmige Gestaltung des Dichtungselements erhöht zudem die Druckfestigkeit gegenüber dem in der angrenzenden Reifenkammer herrschenden Reifendruck.

In einer vorteilhaften alternativen Ausführungsform ist das Dichtungselement als eine im Wesentlichen ebene Dichtscheibe ausgebildet. Ein gewünschter Hohlraum über dem über die Felgenaußenseite erstreckten Teil der Verbindungsanordnung kann bei dieser Ausführung dadurch realisiert werden, dass die Auflagefläche des Randes der Dichtscheibe oberhalb des über die Felgenaußenseite erstreckten Teils der Verbindungsanordnung angeordnet ist. Dass kann z. B. dadurch erfolgen, dass eine entsprechende Schichthöhe der Verklebung des Randes der Dichtscheibe mit dem Felgenbett geschaffen ist oder der über die Felgenaußenseite erstreckte Teil der Verbindungsanordnung im Felgenbett versenkt angeordnet ist.

Die ebene Ausbildung des Dichtungselements ermöglicht eine besonders flache Ausbildung der Dichtungsstellen, die eine weitere erhebliche Erleichterung beim Aufziehen des Reifens darstellt.

Besonders vorteilhaft ist es, wenn die Dichtkappe oder die Dichtscheibe freitragend ausgebildet ist. Die freitragende Dichtkappe bzw. Dichtscheibe liegt ausschließlich mit ihrem Rand auf und verfügt über eine derartige Eigensteifigkeit, dass sie sich unter Ausübung des Innendruckes der Reifenkammer der Radfelge nicht oder nur unwesentlich verformt. Damit wird einerseits eine die Verbindungsanordnung dauerhaft kontaktfrei überspannende Dichtung gewährleistet, die von den Mikrobewegungen des Verbindungselementes und der anderen Verbindungsteile, wie z.B. dem Buchsenteil, vollständig entkoppelt ist. Andererseits wird eine verformungsfreie Auflage des Randes der freitragenden Dichtkappe bzw. Dichtscheibe auf dem Felgenbett gewährleistet, was die Dichtigkeit der Dichtkappe bzw. Dichtscheibe gegenüber dem Felgenbett sichert.

Eine konstruktiv günstige Ausgestaltung sieht vor, dass die Dichtkappe oder die Dichtscheibe eine Stegstruktur zur Abstützung auf dem an der Felgenaußenseite erstreckten Teil der Verbindungsanordnung aufweist.

Bei dieser Ausführungsform kann sich die Dichtkappe bzw. die Dichtscheibe beispielsweise auf das Buchsenteil, den Bundkragen des Buchsenteils und/oder auf das Verbindungselement der Verbindungsanordnung abstützten. Die stützende Stegstruktur erlaubt es, die Dichtkappe bzw. die Dichtscheibe dünnwandiger zu gestalten, was zur Gewichtseinsparung beiträgt.

Nach einer weiteren günstigen Ausführung ist ein flexibler Stützkörper zur Abstützung der Dichtkappe oder der Dichtscheibe auf dem an der Felgenaußenseite erstreckten Teil der Verbindungsanordnung vorgesehen. Der flexible Stützkörper besteht aus einem flexiblen, gummiartigen Material, vorzugsweise auf der Basis von Polyurethan.

Die Dichtkappe bzw. die Dichtscheibe liegt lose auf dem flexiblen Stützkörper auf, der auf dem an der Felgenaußenseite erstreckten Teil der Verbindungsanordnung aufgesetzt oder aufgeklebt ist. Diese Ausführung ermöglicht es ebenfalls, die Dichtkappe bzw. die Dichtscheibe dünnwandiger und damit massereduzierter zu gestalten.

Ist der Stützkörper insbesondere zentrisch angeordnet, wird eine bestmögliche Last- bzw. Druckverteilung über die Fläche der Dichtkappe bzw. Dichtscheibe erreicht, wonach deren Wandstärkenminimierung optimiert werden kann.

Bei einer besonderes flachen Ausführung des Stützkörpers und/ oder einer Anordnung des Stützkörpers im vertieften Werkzeugeingriff des Kopfes des Verbindungselements wird eine weitestgehend flache Ausführung bzw. Anordnung der Dichtkappe bzw. Dichtscheibe ermöglicht, welche die vorstehend beschriebenen Vorteile bei der Reifenmontage bietet.

Des Weiteren kann zur Abstützung die Dichtkappe oder die Dichtscheibe auf einer der Felgenaußenseite zugewandten Seite eine flexible Füllschicht aufweisen.

Füllt die Füllschicht den sich über dem felgenaußenseitigen Teil der Verbindungsanordnung bildenden Hohlraum unter der Dichtkappe bzw. der Dichtscheibe aus, dient dies einer vollflächigen, flexiblen Abstützung der Dichtkappe bzw. der Dichtscheibe auf dem felgenaußenseitig erstreckten Teil der Verbindungsanordnung. Die Füllschicht kann als innenseitige Beschichtung der Dichtkappe bzw. der Dichtscheibe oder als eine eigenständige Füllschicht zwischen der Dichtkappe bzw. der Dichtscheibe und dem auf der Felgenaußenseite des Felgenbetts erstreckten Teil der Verbindungsanordnung ausgebildet sein. Vorzugsweise wird für die Füllschicht ein weichelastischer Klebstoff angewandt, der eine ausreichende Entkopplung der Dichtkappe bzw. der Dichtscheibe von den Mikrobewegungen des Verbindungselement und der anderen Verbindungsteile, wie z.B. dem Buchsenteil gewährt. Bei dieser Ausführung wird eine hohe Stabilität der Dichtung gegenüber dem Innendruck der Reifenkammer der Radfelge erreicht, die eine noch dünnwandigere Ausführung der Dichtkappe bzw. der Dichtscheibe ermöglicht.

In einer weiteren vorteilhaften Ausgestaltung ist vorgesehen, dass ein inneres Buchsenteil der Verbindungsanordnung einen über die Felgeninnenseite des Felgenbetts erstreckten Bundkragen aufweist.

Der an der Felgeninnenseite anliegende untere Bundkragen des inneren Buchsenteils verbessert die Krafteinleitung und Verteilung der Flächenpressung der Radscheibe gegen das Felgenbett aus Faserverbundwerkstoff und bietet somit einen höheren Schutz der Faserstruktur des Felgenbetts unter der Dauerbelastung der mechanischen Verbindung mit insbesondere metallischen Radscheiben. Die Kräfte werden im Bereich der Verbindungsanordnung noch großflächiger in die Faserverbundstruktur eingeleitet.

In diesem Zusammenhang ist es weiter vorteilhaft, wenn dieser Bundkragen eine korrespondierende Anschlussfläche für den Sitz einer Anschlussfläche der Radscheibe aufweist, so dass das Buchsenteil als ein widerstandsfähiger Reibpartner mit einem großflächigen Reibschluss für den Anschluss der Radscheibe zur Verfügung steht, der das Felgenbett aus Faserverbundwerkstoff im Bereich der Verbindungsanordnung noch besser schützt.

Weitere Vorteile ergeben sich, wenn der Bundkragen des inneren Buchsenteils einen Überstand über der Kontur der Felgeninnenseite des Felgenbetts aufweist. So steht die Radscheibe ausschließlich mit dem Buchsenteil in Kontakt, womit im Betrieb des Fahrzeugrades ein unmittelbarer Schwingreibverschleiß zwischen der Radscheibe und dem Felgenbett gänzlich vermieden wird.

Eine konstruktiv günstige Ausgestaltung sieht vor, dass mehrere Buchsenteile einer Verbindungsanordnung ineinandergreifend angeordnet sind. In dieser Weise ist der Durchgang durch das Felgenbett aus Faserverbundwerkstoff vollständig durch die Buchsenteile einfasst und der Faserverbundwerkstoff des Felgenbetts im Durchgang geschützt. Das Zusammenwirken der ineinandergreifenden Buchsenteile kompensiert zudem die im Betrieb des Fahrzeugrades auftretenden Relativbewegungen der mechanischen Verbindung noch besser. Der Schwingreibverschleiß zwischen dem Verbindungselement und der Faserstruktur des Felgenbetts wird hierdurch deutlich gemindert, was neben der gewährleisteten hohen Dichtigkeit die Betriebssicherheit der Verbindungsanordnung weiter verbessert.

Zudem können die ineinandergreifenden Buchsenteile eine umfassende galvanische Abschirmung des Felgenbetts gegenüber der Radscheibe und dem Verbindungselement erzeugen, die insbesondere bei der Verwendung metallischer Radscheiben das Auftreten von Kontaktkorrosion verhindert.

Die erfindungsgemäße Vorrichtung wird an folgenden Ausführungsbeispielen näher erläutert. Die zugehörigen Zeichnungen zeigen in einer schematischen Darstellung in
- Fig. 1: eine teilweise Schnittdarstellung eines erfindungsgemäßen Fahrzeugrades mit einer Radfelge, einer sternförmigen Radscheibe und mehreren Verbindungsanordnungen mit je einer Verbindungsschraube, überdeckt mit einer freitragenden Dichtkappe,
- Fig. 2: eine teilweise Schnittdarstellung des Fahrzeugrades nach Fig. 1 mit mehreren Verbindungsanordnungen mit je einer Verbindungsschraube und einem Buchsenteil, überdeckt mit einer freitragenden Dichtkappe,
- Fig. 3: eine teilweise Schnittdarstellung des Fahrzeugrades nach Fig. 1 mit mehreren Verbindungsanordnungen mit je einer Verbindungsschraube und zwei Buchsenteilen, überdeckt mit einer freitragenden Dichtkappe,
- Fig. 4: eine teilweise Schnittdarstellung des Fahrzeugrades nach Fig. 1 mit mehreren Verbindungsanordnungen mit je einer Verbindungsschraube und zwei Buchsenteilen, überdeckt mit einer freitragenden Dichtkappe auf einen Lackschicht,
- Fig. 5: eine teilweise Schnittdarstellung des Fahrzeugrades nach Fig. 1 mit mehreren Verbindungsanordnungen mit je einer Verbindungsschraube und zwei Buchsenteilen, überdeckt mit einer freitragenden Dichtkappe unter einen Lackschicht,
- Fig. 6: eine teilweise Schnittdarstellung des Fahrzeugrades nach Fig. 1 mit mehreren Verbindungsanordnungen mit je einer Verbindungsschraube und zwei Buchsenteilen, überdeckt mit einer Dichtkappe mit Stegstruktur,
- Fig. 7: eine teilweise Schnittdarstellung des Fahrzeugrades nach Fig. 1 mit mehreren Verbindungsanordnungen mit je einer Verbindungsschraube und zwei Buchsenteilen, überdeckt mit einer Dichtkappe mit flexibler Füllschicht,
- Fig. 8: eine teilweise Schnittdarstellung des Fahrzeugrades nach Fig. 1 mit mehreren Verbindungsanordnungen mit je einer Verbindungsschraube und einem Buchsenteil, überdeckt mit einer Dichtkappe und einem flexiblem Stützkörper,
- Fig. 9: eine teilweise Schnittdarstellung des Fahrzeugrades nach Fig. 1 mit mehreren Verbindungsanordnungen mit je einer Verbindungsschraube und einem Buchsenteil, überdeckt mit einer Dichtscheibe,
- Fig. 10: eine Detaildarstellung des Fahrzeugrades nach Fig. 9; das Buchsenteil überdeckt mit einer zum Felgenbett bündigen Dichtscheibe,
- Fig. 11: eine isometrische Darstellung des Fahrzeugrades nach Fig. 1 mit mehreren Verbindungsanordnungen mit je zwei benachbarten Verbindungsschrauben je Speiche, überdeckt mit einer gemeinsamen Dichtscheibe oder Dichtkappe,
- Fig. 12: eine teilweise Schnittdarstellung des Fahrzeugrades nach Fig. 1 mit mehreren Verbindungsanordnungen mit je einer Verbindungsschraube und zwei Buchsenteilen und einer überdeckenden Lackschicht.

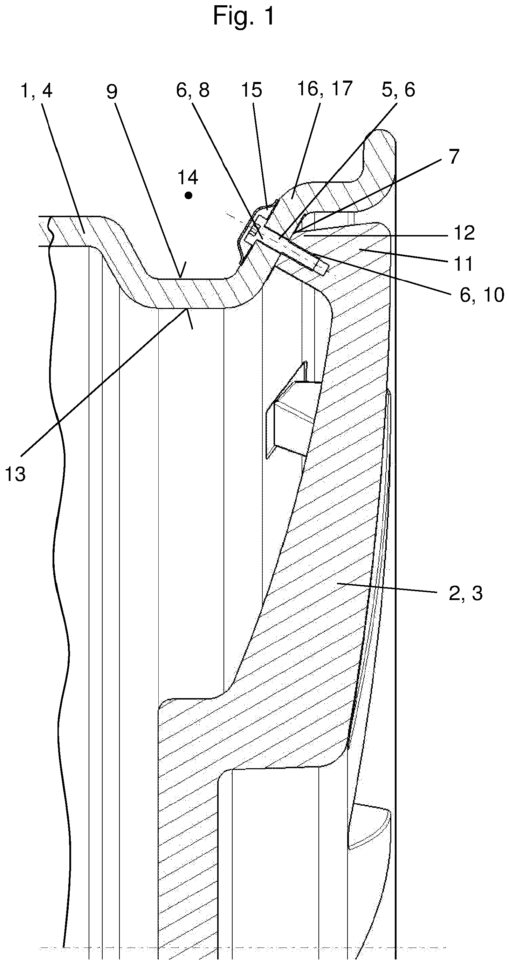

Fig. 1 zeigt einen Ausschnitt eines Fahrzeugrades mit einer Radfelge 1 und einer sternförmigen Radscheibe 2 mit einer Speicheneinheit 3 aus Edelstahl. Die Radfelge 1 weist ein Felgenbett 4 aus kohlefaserverstärktem Kunststoff (CFK) auf, das mit Carbon Nanotubes besonders verstärkt ist.

Die Radscheibe 2 ist mittels mehrerer, entsprechend der Anzahl der Speichen 3 vorgesehenen Verbindungsanordnungen 5, bestehend aus jeweils einer Flachkopf-Verbindungsschraube 6, mit der Radfelge 1 fest verschraubt. Die Flachkopf-Verbindungsschrauben 6 aus Edelstahl sind jeweils durch ein Durchgangsloch 7 des Felgenbetts 4 geführt, wobei ein Flachkopf 8 der Verbindungsschraube 6 sich an der Felgenaußenseite 9 der Radfelge 1 erstreckt und bündig am Felgenbett 4 ansitzt, während ein Gewindeschaft 10 der Verbindungsschraube 6 in je ein Speichenende 11 der Radscheibe 2 eingreift. Im fest verschraubten Zustand liegen die Stirnflächen 12 der Speichenenden 11 an einer Felgeninnenseite 13 der Radfelge 1 jeweils bündig am Felgenbett 4 an.

Auf der Felgenaußenseite 9 schließt sich eine, nur andeutungsweise dargestellte Reifenkammer 14 der Radfelge 1 an, die durch einen nicht dargestellten Reifen, welcher auf der Radfelge 1 sitzt, begrenzt wird. Damit ist die Verbindungsanordnung 5 im montierten Zustand des Fahrzeugrades verdeckt und von außen nicht sichtbar.

Ein Dichtungselement 15 in Form einer freitragenden Dichtkappe 15 überdeckt hohl liegend den an der Felgenaußenseite 9 erstreckten Schraubenkopf 8 vollständig, ohne diesen dabei zu kontaktieren. An einem geflanschten Rand 16 ist die Dichtkappe 15 mittels einer umlaufenden Verklebung 17 luftdicht mit dem Felgenbett 4 verklebt.

Die gewölbt geformte Dichtkappe 15 aus Edelstahl verfügt über eine ausreichende Eigensteifigkeit, die die Formstabilität der Dichtkappe 15 auch unter dem herrschenden Reifendruck der sich anschließenden Reifenkammer 14 mit bis zu 8 bar gewährleistet und den unmittelbaren Kontakt mit dem Schraubenkopf 8 verhindert.

Durch die randseitig verklebte, eigenstabile Dichtkappe 15 wird die Reifenkammer 14 vollständig gegenüber dem Durchgangsloch 7 des Felgenbetts 4 und der Verbindungsschraube 6 und damit gegenüber der Außenatmosphäre abgedichtet.

Befindet sich die Verbindungsanordnung 5 in einem Bereich des Felgenbetts 4 mit einer gekrümmten Oberfläche der Felgenaußenseite 9 ist vorzugsweise zumindest die Auflagefläche der Dichtkappe 15 plan gefräst, damit der umlaufend Rand 16 der Dichtkappe 15 bestmöglich am Felgenbett 4 anliegt. Die ebene plane Ausfräsung kann sich auch über den gesamten überdeckenden Bereich des Dichtungselements, hier der Dichtkappe 15, erstrecken, so dass auch der auf und an der Felgenaußenseite 9 erstreckte Teil der Verbindungsanordnung 5 eine plane Anlage am Felgenbett 4 verfährt, wie in den Figuren 1 bis 9 ersichtlich.

Die Dichtkappe 15 befindet sich außerhalb der kraftschlüssigen Flächenpressung der Verbindungsschraube 6 gegen das Felgenbett und die Radscheibe 2 und ist von den im Betrieb des Fahrzeugrades in Erscheinung tretenden Relativbewegungen zwischen der Radscheibe 2, der Verbindungsschraube 6 und dem Felgenbett 4 vollständig entkoppelt.

Die Dichtkappe 15 und deren Verklebung 17 unterliegen nicht der mechanischen Beanspruchung der kraftschlüssigen Verbindungsanordnung 5 und sind vor Kriecherscheinungen und Schwingreibverschleiß geschützt. Die Dichtwirkung der Verbindungsanordnung 5 ist damit dauerhaft gesichert.

Zugleich hält das mit Carbon Nanotubes besonders verstärkte Felgenbett 4 den mechanischen Belastungen in der Verbindungsanordnung 5 ausreichend stand, so dass im Ergebnis eine zuverlässige und betriebssichere Verbindungsanordnung 5 mit funktionssicherer Dichtung zur Verbindung der Radfelge 1 mit der Radscheibe 2 realisiert ist.

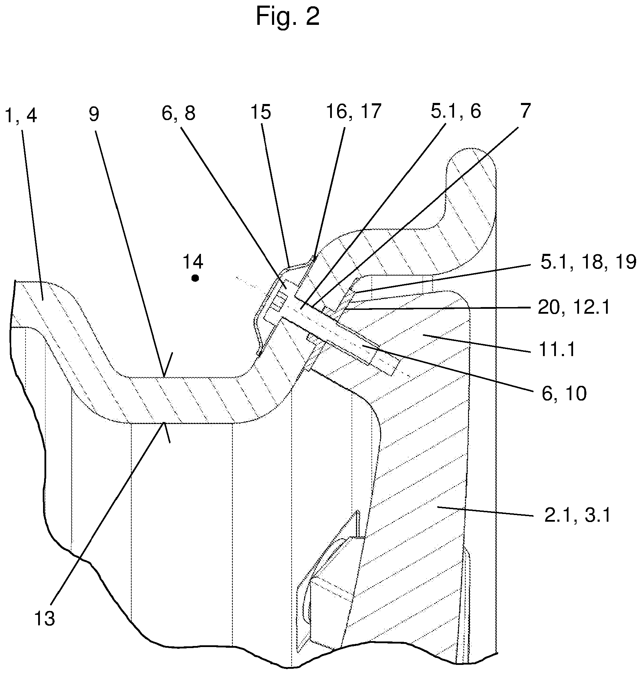

In Fig. 2 ist ein Ausschnitt eines Fahrzeugrades mit einer Radfelge 1 und einer sternförmigen Radscheibe 2.1 mit einer Speicheneinheit 3.1 dargestellt, die mittels mehrerer, entsprechend der Anzahl der Speichen 3.1 vorgesehenen Verbindungsanordnungen 5.1 miteinander verbunden sind. Das Felgenbett 4 der Radfelge 1 besteht, wie bei dem Ausführungsbeispiel nach der Fig. 1, aus CFK, das mit Carbon Nanotubes besonders verstärkt ist. Die Radscheibe 2.1 ist aus Aluminium gefertigt. Nachfolgend werden im Wesentlichen nur die Unterschiede gegenüber dem Ausführungsbeispiel nach Fig. 1 beschrieben. Gleiche Bauteile werden mit denselben Bezugszeichen versehen.

In einem weiteren Unterschied gegenüber der Ausführung nach Fig. 1 besteht die jeweilige Verbindungsanordnung 5.1 neben der Flachkopf-Verbindungsschraube 6 aus Edelstahl aus einem inneren Insert-Buchsenteil 18 aus Edelstahl, das von der Felgeninnenseite 13 gesehen in den Durchgangslöchern 7 des Felgenbetts 4 angeordnet ist und einen über die Felgeninnenseite 13 der Radfelge 1 erstreckten Bundkragen 19 aufweist. Ein Schaft des Insert-Buchsenteils 18 ist plan in das Durchgangsloch 7 eingelassen. Das Insert-Buchsenteil 18 kleidet das Durchgangsloch 7 teilweise aus und fasst den auf der Felgeninnenseite 13 erstreckten Randbereich des Felgenbettes 4 ein.

Die Verbindungsschraube 6 ist bündig durch das Durchgangsloch 7 und das innere Insert-Buchsenteil 18 durchgeführt, wobei der flache Schraubenkopf 8 bündig an der Felgenaußenseite 9 der Radfelge 1 ansitzt und der Gewindeschaft 10 in je ein Speichenende 11.1 der Radscheibe 2.1 eingreift.

Jeder Bundkragen 19 hat eine gewisse Wandstärke, mit der er in den inneren Felgenhohlraum der Radfelge 1 erstreckt ist und einen Überstand über der inneren Kontur des Felgenbetts 4 aufweist. Auf jedem der Bundkragen 19 ist eine Anschlussfläche 20 ausgebildet für den korrespondierenden Sitz jeweils der Stirnfläche 12.1 der Speichenenden 11.1 der Radscheibe 2.1. Die Anschlussfläche 20 bildet im Betrieb des Fahrzeugrades einen soliden Reibpartner für die Stirnflächen 12.1 der Speichenenden 11.1 der Radscheibe 2.1.

Die bei dieser Ausführung der Verbindungsanordnung 5.1 während des Betrieb des Fahrzeugrades auftretenden Mikrobewegungen üben keinen unmittelbaren Schwingreibverschleiß zwischen der Faserstruktur des Felgenbetts 4 und der scharfkantigen Stirnfläche 12.1 der Aluminium-Radscheibe 2.1 aus und bewirken einen geminderten Schwingreibverschleiß zwischen der Faserstruktur des Felgenbetts 4 und der Verbindungsschraube 6.

Dies ist umso vorteilhafter, da die Relativbewegungen infolge der Elastizität der Radscheibe 2.1 aus Aluminium wesentlich stärker als bei einer relativ steiferen Radscheibe 2 aus Edelstahl gemäß der Fig. 1 sind. Durch das zusätzliche Insert-Buchsenteil 18 kann die Betriebssicherheit der Verbindungsanordnung 5.1 weiter verbessert werden.

Analog zum Dichtungselement 15 nach der Fig. 1 überdeckt die freitragende Dichtkappe 15 aus Edelstahl den an der Felgenaußenseite 9 erstreckten Schraubenkopf 8 vollständig, ohne diesen dabei zu kontaktieren. Am geflanschten Rand 16 ist die Dichtkappe 15 mittels einer umlaufenden Verklebung 17 luftdicht mit dem Felgenbett 4 verklebt.

Mit dieser Dichtkappe 15 werden die gleichen Vorteile wie bei dem Ausführungsbeispiel nach Fig. 1 verwirklicht. Dichtungen des Buchsenteils 18 gegen das Felgenbett 4 und die Radscheibe 2.1 sind nicht erforderlich.

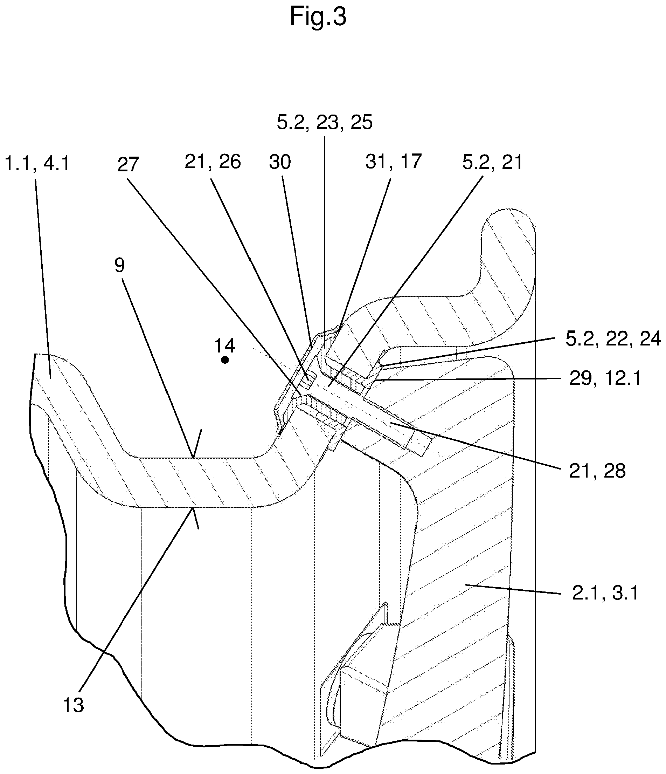

Fig. 3 zeigt im Unterschied gegenüber der Ausführung nach Fig. 2 den Ausschnitt eines Rades, bei dem eine Radfelge 1.1 mit einem Felgenbett 4.1 aus glasfaserverstärktem Kunststoff (GFK) und eine sternförmige Radscheibe 2.1 mit einer Speicheneinheit 3.1 aus Aluminium mittels mehrere Verbindungsanordnungen 5.2 in entsprechender Anzahl der Speichen 3.1 miteinander verbunden sind.

Nachfolgend werden im Wesentlichen nur die Unterschiede gegenüber dem Ausführungsbeispiel nach Fig. 2 beschrieben. Gleiche Bauteile werden mit denselben Bezugszeichen versehen.

Die Verbindungsanordnung 5.2 besteht jeweils aus einer Senckopf-Verbindungsschraube 21 aus Stahl und einem inneren Buchsenteil 22 und äußeren Buchsenteil 23 aus Stahl, welche von der Felgeninnenseite 13 bzw. von der Felgenaußenseite 9 aus gesehen im Durchgangsloch 7 des Felgenbetts 4.1 gesteckt sind und ineinandergreifend angeordnet sind. Das innere Buchsenteil 22 weist einen über die Felgeninnenseite 13 der Radfelge 1.1 erstreckten Bundkragen 24 ähnlich dem Bundkragen 19 des Insert-Buchsenteils 18 nach der Ausführung in Fig. 2 auf, während das äußere Buchsenteil 23 einen über die Felgenaußenseite 9 der Radfelge 1.1 erstreckten Bundkragen 25 aufweist.

Die Senkkopf-Verbindungsschraube 21 ist durch das Durchgangsloch 7 mit dem eingesteckten äußeren und inneren Buchsenteil 22, 23 durchgeführt, wobei der konische Senkkopf 26 der Senckopf-Verbindungsschraube 21 bündig an einer konischen Anlagefläche 27 eines konischen Abschnitts des äußeren Buchsenteils 23 ansitzt und der Gewindeschaft 28 in je ein Speichenende 11.1 der Radscheibe 2.1 eingreift.

Auf jedem Bundkragen 24 der inneren Buchsenteile 22, die einen Überstand über der inneren Kontur des Felgenbetts 4.1 aufweisen, ist eine Anschlussfläche 29 für den korrespondierenden Sitz jeweils der Stirnfläche 12.1 der Speichenenden 11.1 der Radscheibe 2.1 ausgebildet. Die Anschlussfläche 29 bildet - analog der Anschlussfläche 20 des Bundkragens 19 des Insert-Buchsenteil 18 nach der Ausführung in Fig. 2 - einen soliden Reibpartner für die Stirnflächen 12.1 der Speichenenden 11.1 der Radscheibe 2.1, ohne das Felgenbett 4.1 zu kontaktieren. Die beiden Buchsenteilen 22, 23 fassen sowohl das gesamte Durchgangsloch 7 als auch den auf der Felgenaußenseite 9 und den auf der Felgeninnenseite 13 erstreckten Randbereich ein.

In dieser Ausführung der Verbindungsanordnung 5.2 bewirken die während des Betrieb des Fahrzeugrades auftretenden Mikrobewegungen keinen unmittelbaren Schwingreibverschleiß zwischen der Faserstruktur des Felgenbetts 4.1, der Senkkopf-Verbindungsschraube 21 und der Radscheibe 2.1. Die Verbindungsanordnung 5.2 schützt umfangreich insbesondere das Felgenbett 4.1 aus relativ weichem GFK.

Die ineinandergreifende Anordnung der Buchsenteile 22, 23 kann zudem die Relativbewegungen innerhalb der Verbindungsanordnung 5.2 kompensieren und den Schwingreibverschleiß weiter mindern.

Dies ist umso vorteilhafter, da die Relativbewegungen infolge der Elastizität der Radscheibe 2.1 aus Aluminium wesentlich stärker als bei einer relativ steiferen Radscheibe 2 aus Edelstahl gemäß der Fig. 1 sind.

Durch die Verwendung des Buchsensystems aus zwei ineinandergreifenden Buchsenteilen 22, 23 wird die Betriebssicherheit der Verbindungsanordnung 5.2 weiter verbessert.

Die zuverlässige Dichtigkeit der Verbindungsanordnung 5.2 wird durch eine freitragende, eigenstabile Dichtkappe 30 aus Stahl erzielt, die den Schraubenkopf 26 der Senkkopf-Verbindungsschraube 21 und den Bundkragen 25 des äußeren Buchsenteils 23 vollständig überdeckt, ohne diese Teile der Verbindungsanordnung 5.2 zu kontaktieren. Ein geflanschter Rand 31 der Dichtkappe 30 liegt im Randbereich um den an der Felgenaußenseite 9 erstreckten äußeren Bundkragen 23 am Felgenbett 4.1 an und ist mittels einer umlaufenden Verklebung 17 luftdicht mit dem Felgenbett 4.1 verklebt.

Vorzugsweise weist der Bereich der überdeckenden Dichtkappe 30 eine plane Ausfräsung der gekrümmten Oberfläche der Felgenaußenseite 9 auf, wodurch der auf der Felgenaußenseite 9 erstreckte Teil der Verbindungsanordnung 5.2 und der umlaufende Rand 31 der Dichtkappe 30 bestmöglich am Felgenbett 4 anliegt.

Damit wird eine vollkommene Abdichtung der Verbindungsanordnung 5.2 gegen den Luftdruck der Reifenkammer 14 erzielt, wobei durch die externe Lage und formstabile Gestaltung der Dichtkappe 30 die Dichtwirkung für die Verbindungsanordnung 5.2 dauerhaft erhalten bleibt.

Neben der Verbesserung der Betriebssicherheit der Verbindungsanordnung 5.2 durch das Buchsensystem 22, 23 werden mit dieser Dichtkappe 30 die gleichen Vorteile betreffs der Dichtwirkung wie bei den Ausführungsbeispielen nach Fig. 1 und 2 verwirklicht. Dichtungen der Buchsenteile 22, 23 untereinander und gegen das Felgenbett 4.1 und die Radscheibe 2.1 sind nicht erforderlich.

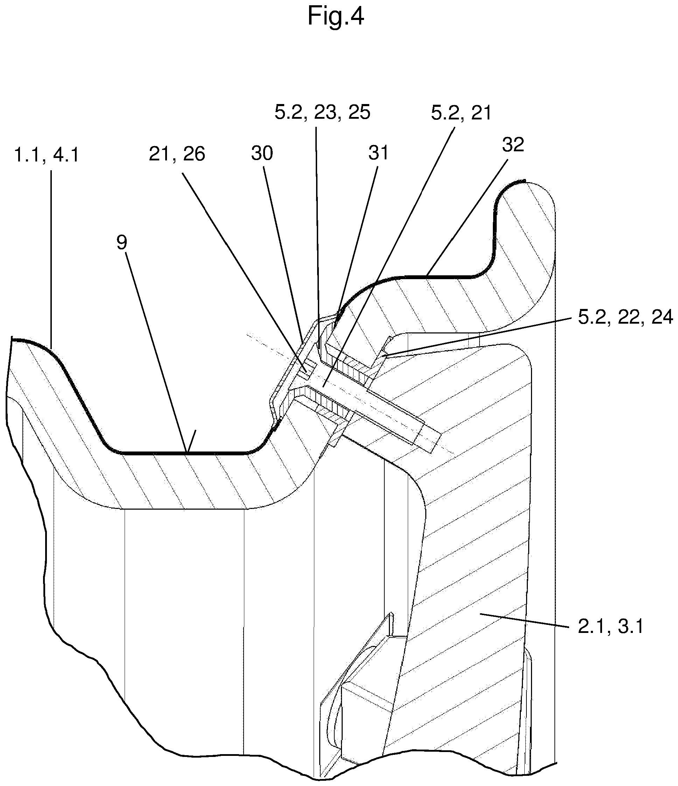

Fig. 4 zeigt analog zur Darstellung nach Fig. 3 ein Ausschnitt eines Rades, bei dem eine Radfelge 1.1 mit einem Felgenbett 4.1 aus GFK und eine sternförmige Radscheibe 2.1 mit einer Speicheneinheit 3.1 aus Aluminium mittels der Verbindungsanordnungen 5.2 gemäß Fig. 3 miteinander verbunden sind.

Nachfolgend werden im Wesentlichen nur die Unterschiede gegenüber dem Ausführungsbeispiel nach Fig. 3 beschrieben. Gleiche Bauteile werden mit denselben Bezugszeichen versehen.

Abweichend zur Ausführung nach Fig. 3 weist das Felgenbett 4.1 eine zähelastischen Lackschicht 32 auf, die auf der Felgenaußenseite 9 des Felgenbetts 4.1 zur Erhöhung der Luftdichtigkeit des Faserverbundwerkstoffs des Felgenbetts 4.1 aufgetragen ist. Die Lackschicht 32 kann beispielsweise durch eine Pulverlackierung mit zähelastischem Kunststoffgranulat gebildet sein. Die Lackschicht 32 aus zähelastischem Kunststoff umschließt jeweils den Bundkragen 25 des an der Felgenaußenseite 9 erstreckten äußeren Buchsenteils 23 der Verbindungsanordnung 5.2. Die freitragende, eigenstabile Dichtkappe 30 aus Stahl, die den Schraubenkopf 26 der Senkkopf-Verbindungsschraube 21 und den Bundkragen 25 vollständig überdeckt, wird auf der zähelastischen Lackschicht 32 aufgesetzt und deren Rand 31 im Randbereich um den Bundkragen 25 mit der Lackschicht 32 luftdicht verklebt. Die Lackschicht 32, die üblicherweise zur Versiegelung des Felgenbetts 4.1 verwendet wird, eignet sich gut als elastisches Dicht- und Klebemittel für die Fixierung und luftdichte Verklebung der Dichtkappen 30. Eine Verklebung mit einem separaten Klebemittel wird nicht benötigt.

Die mit der Lackschicht 32 verklebten Dichtkappen 30 vervollständigen die luftdichte Versiegelung des Felgenbetts 4.1, wobei die Lackschicht 32 im Innenraum der Dichtkappe 30 entbehrlich ist. Der Bundkragen 25 des äußeren Buchsenteils 23 kann sich unmittelbar auf dem Felgenbett 4.1 abstützen. Die Lackschicht 32 befindet sich nicht im Kraftfluss der Verbindungsanordnung 5.2, so dass ein nachteiliges Kriechen der Lackschicht 32 aufgrund der Mikrobewegungen des Buchsenteils 23 ausgeschlossen ist.

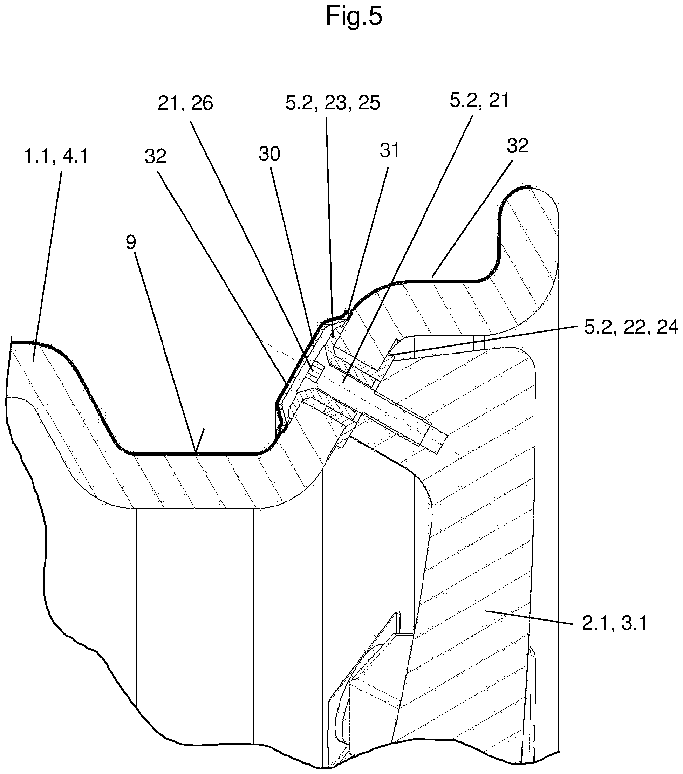

Aus Fig. 5 ist analog zur Darstellung nach Fig. 4 die Radfelge 1.1 mit einem Felgenbett 4.1 aus GFK und die sternförmige Radscheibe 2.1 mit einer Speicheneinheit 3 aus Aluminium ersichtlich, die mittels der Verbindungsanordnungen 5.2 gemäß Fig. 3 miteinander verbunden sind. Das Felgenbett 4.1 ist zur Erhöhung der Luftdichtigkeit des Faserverbundwerkstoffs auf der Felgenaußenseite 9 mit der zähelastischen Lackschicht 32 beschichtet.

Nachfolgend werden im Wesentlichen nur die Unterschiede gegenüber dem Ausführungsbeispiel nach Fig. 4 beschrieben. Gleiche Bauteile werden mit denselben Bezugszeichen versehen.

Im Unterschied zur Ausführung nach Fig. 4 ist die Lackschicht 32 aus zähelastischem Kunststoff, die der üblichen Versiegelung des Felgenbetts 4.1 dient, durchgängig über das Felgenbett 4.1 ausgebildet, wobei die auf dem Felgenbett 4.1 angehefteten, freitragenden Dichtkappen 30 aus Stahl mit der Lackschicht 32 überzogen werden und gleichzeitig am geflanschten Rand 31 luftdicht mit der Lackschicht 32 verklebt werden.

Mit dieser Ausführung kann neben den vorbeschriebenen Vorteilen eine geschlossen-flächige luftdichte Versiegelung außerhalb der Verbindungsanordnung 5.2 unter Minimierung des Fertigungsaufwand erreicht werden, da die luftdichte Verklebungen der Dichtkappen 30 zugleich mit dem Fertigungsvorgang der Beschichtung des Felgenbetts 4.1 ausgeführt werden kann.

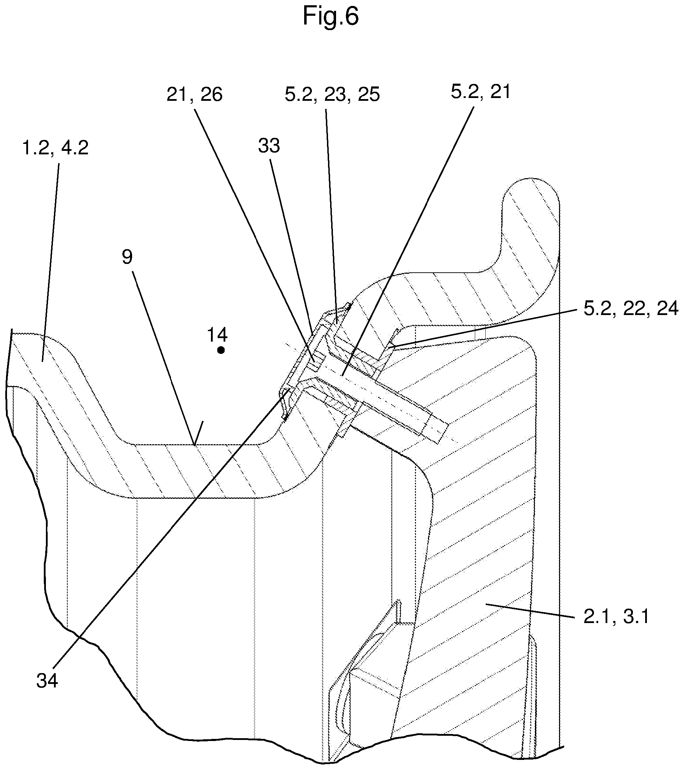

Im Ausführungsbeispiel nach Fig. 6 ist ein Ausschnitt eines Fahrzeugrades dargestellt, das eine Radfelge 1.2 mit einem Felgenbett 4.2 aus CFK und die sternförmige Radscheibe 2.1 mit der Speicheneinheit 3.1 aus Aluminium aufweist, die mittels der Verbindungsanordnungen 5.2 nach Fig. 3 miteinander verbunden sind.

Im Unterschied zu den vorbeschriebenen Ausführungen ist das Dichtungselement 33 zur Dichtung der Verbindungsanordnung 5.2 eine Dichtkappe 33 aus Kunststoff, welche den Schraubenkopf 26 der Senkkopf-Verbindungsschraube 21 und den an der Felgenaußenseite 9 erstreckten äußeren Bundkragen 25 des äußeren Buchsenteils 23 vollständig überdeckt. Die hohl liegende Dichtkappe 33 weist eine Stegstruktur 34 zur Abstützung gegenüber dem Bundkragen 25 auf, ohne jedoch den Senkkopf 26 zu kontaktieren.

Ein geflanschter Rand 35 der Dichtkappe 33 liegt im Randbereich um den Bundkragen 25 am Felgenbett 4.2 an und ist mittels einer umlaufenden Verklebung 17 luftdicht mit dem Felgenbett 4.2 verklebt, um die Verbindungsanordnung 5.2 gegenüber der Reifenkammer abzudichten.

Die Stegstruktur 34 verleiht der relativ dünnwandig ausgebildeten Dichtkappe 33 aus Kunststoff eine ausreichende Formstabilität, so dass sich die Dichtkappe 33 unter dem herrschenden Reifendruck der Reifenkammer 14 der Radfelge 1.2 nicht verformt und dadurch einerseits ein dichtender Anschluss der Dichtkappe 33 an das Felgenbett 4.2 dauerhaft gewährleistet wird und andererseits ein unmittelbarer Kontakt mit dem Senckopf 26 vermieden wird.

Die Stegstruktur 34 stützt sich in loser, schwimmender Auflage gegen den Bundkragen 25 ab, so dass sich das äußere Buchsenteil 23 unter den Mikrobewegungen während des Betriebes des Fahrzeugrades frei bewegen kann und die Übertragung von Schwingungen auf die Dichtkappe 33 weitestgehend entkoppelt wird.

Diese Ausführung eignet sich insbesondere für Radkonstruktionen mit höherer Steifigkeit, wie sie beispielsweise bei Sportwagen eingesetzt werden. Bei diesen Radkonstruktionen treten Relativbewegungen in der Verbindungsanordnung infolge einer steiferen Radfelge und/oder einer steiferen Radscheibe im geringeren Maße auf, so dass die Auswirkungen auf die mit den Buchsenteilen lose in Kontakt stehenden Dichtkappen 33 entsprechend vernachlässigbar sind. Im vorliegenden Ausführungsbeispiel ist die Radscheibe 2.1 aus Aluminium mit einer steif beschaffenen Radfelge 1.2 kombiniert, deren Felgenbett 4.2 aus CFK eine große Wandstärke aufweist und/oder der CFK eine hohe Faserdichte und/oder hochmodulige Fasern von hoher Steifigkeit hat.

Diese Ausführung der Dichtkappe 33 mit Stegstruktur 34 ermöglicht die Wandstärke und das Gewicht der Dichtkappen 33 zu minimieren, was zu einem Masseersparnis an der Radkonstruktion führt, welcher gerade bei Sportwagen von Bedeutung ist.

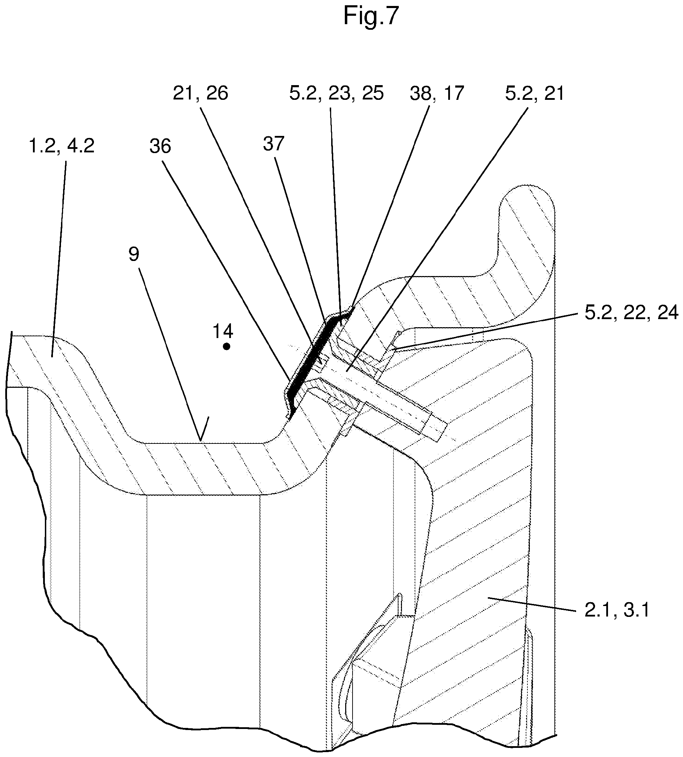

Fig. 7 zeigt ein Ausschnitt eines Fahrzeugrades, das analog dem Ausführungsbeispiel nach Fig. 6 eine Radfelge 1.2 mit einem Felgenbett 4.2 aus CFK und eine sternförmige Radscheibe 2.1 mit einer Speicheneinheit 3.1 aus Aluminium aufweist, die mittels den Verbindungsanordnungen 5.2 gemäß der Ausführung nach Fig. 3 miteinander verbunden sind.

Nachfolgend werden im Wesentlichen nur die Unterschiede gegenüber der Ausführungsform nach Fig. 6 beschrieben. Gleiche Bauteile werden mit denselben Bezugszeichen versehen.

Im Unterschied zur Dichtung der Verbindungsanordnung 5.2 nach Fig. 6 ist das Dichtungselement 36 eine besonders dünnwandige Dichtkappe 36 aus Kunststoff mit einer innenseitigen Beschichtung durch eine Füllschicht 37. Die dünnwandige Dichtkappe 36 überdeckt den Schraubenkopf 26 der Senkkopf-Verbindungsschraube 21 und den an der Felgenaußenseite 9 erstreckten Bundkragen 25 des äußeren Buchsenteils 23 unter Bildung eines Hohlraumes vollständig.

Die dünnwandige Dichtkappe 36 aus Kunststoff ist innenseitig, also der Felgenaußenseite 9 zugewandt, mit der Füllschicht 37 aus einem weichelastischen Füllklebestoff ausgekleidet, wobei im montierten Zustand die Füllschicht 37 den Hohlraum über der Verbindungsanordnung 5.2 ausfüllt und an dem Schraubenkopf 26 und dem Bundkragen 25 anliegt.

Alternativ kann anstelle der Beschichtung eine separate Füllschicht oder ein Füllkörper aus einem weichelastischen Kunststoff im Hohlraum zwischen dem Schraubenkopf 26 und/oder dem Bundkragen 25 und der Dichtkappe 36 angeordnet sein.

Der vorzugsweise unbeschichtete, geflanschte Rand 38 der Dichtkappe 36 liegt im Randbereich um den Bundkragen 25 am Felgenbett 4.2 an und ist mittels einer umlaufenden festen Verklebung 17 luftdicht mit dem Felgenbett 4.2 verklebt, um die Dichtung der Verbindungsanordnung 5.2 gegenüber der Reifenkammer herzustellen.

Die Beschichtung 37 der Dichtkappe 33 bzw. die zwischengeordnete Füllschicht/Füllkörper 37 stützt einerseits die Dichtkappe 36 gegen den Reifendruck der Reifenkammer 14 ab, so dass auch mit dieser Ausführung die Wandstärke und das Gewicht der Dichtkappen 36 zu Gunsten einer leichten Radkonstruktion reduziert sein kann.

Die Beschichtung 37 der Dichtkappe 33 bzw. die zwischengeordnete Füllschicht/Füllkörper 37 erzeugt andererseits eine schwimmende Auflage auf dem Schraubenkopf 26 und dem Bundkragen 25, so dass sich die Senkkopf-Verbindungsschraube 21 und das äußere Buchsenteil 23 unter den Mikrobewegungen während des Betriebes des Fahrzeugrades frei bewegen können. Die Schwingungen werden durch die weichelastische Füllschicht 37 weitestgehend entkoppelt und in nur geringfügigem Maße auf die Dichtkappe 36 übertragen.

Diese Ausführung eignet sich ebenfalls für Radkonstruktionen mit höherer Steifigkeit, wie sie bei Sportwagen eingesetzt werden. Im vorliegenden Ausführungsbeispiel ist, wie beim Ausführungsbeispiel nach Fig. 6, die Radscheibe 2.1 aus Aluminium mit einer steif beschaffenen Radfelge 1.2 kombiniert, deren Felgenbett 4.2 aus CFK eine große Wandstärke aufweist und/oder der CFK eine hohe Faserdichte und/oder hochmodulige Fasern von hoher Steifigkeit hat. Die bei diesen Radkonstruktionen im geringeren Maße auftretenden Relativbewegungen in der Verbindungsanordnung wirken sich vernachlässigbar gering auf die flexibel abgestützten Dichtkappen 36 aus.

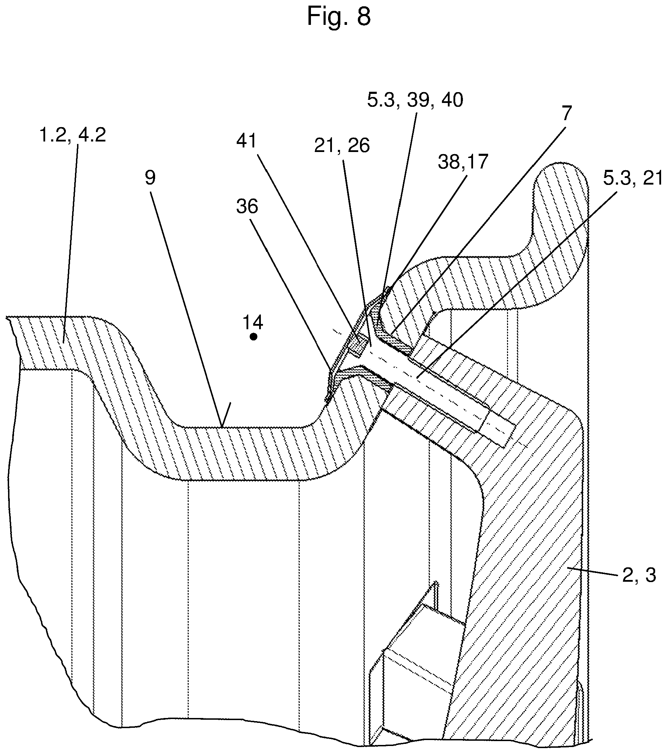

Das Ausführungsbeispiel nach Fig. 8 betrifft ebenfalls eine relativ steife Radkonstruktion entsprechend der Figuren 6 und 7. Fig. 8 zeigt einen Ausschnitt eines Fahrzeugrades, das eine Radfelge 1.2 mit einem Felgenbett 4.2 großer Wandstärke aus CFK und eine sternförmige Radscheibe 2 aus Edelstahl analog der Ausführung nach Fig. 1 aufweist.

Im Unterschied zu den Ausführungen nach Fig. 6 und 7 ist die Radfelge 1.2 und die Radscheibe 2 mittels mehrerer Verbindungsanordnungen 5.3 in entsprechender Anzahl der Speichen 3 miteinander verbunden, die jeweils aus der Senkkopf-Verbindungsschraube 21 und einem äußeren Insert-Buchsenteil 39 bestehen.

Diese Buchsenausführung ist u. a. für Einsatzfälle geeignet, bei denen der unmittelbare Kontakt der Radscheibe mit dem Felgenbett materialtechnisch unproblematisch ist. Die einfache einteilige, massearme Ausführung bietet neben Gewichtseinsparungen einen geringeren Herstellungs- und Montageaufwand und verbessert so die Leichtbauweise der Radkonstruktion bei minderten Kosten.

Das äußere Insert-Buchsenteil 39 ist von der Felgenaußenseite 9 gesehen im Durchgangsloch 7 des Felgenbetts 4.2 eingesteckt und kleidet das Durchgangsloch 7 im Wesentlichen vollständig aus. Ein konischer Abschnitt des äußeren Insert-Buchsenteils ist in einer entsprechend gefasten Ausnehmung des Felgenbetts 4.2 eingelassen.

Das äußere Insert-Buchsenteil 39 weist einen über die Felgenaußenseite 9 erstreckten Bundkragen 40 auf.

Der Schraubenkopf 26 der Senkkopf-Verbindungsschraube 21 liegt im montierten Zustand plan an der Anlagefläche des konischen Abschnitts des äußeren Insert-Buchsenteils 39 an.

Der konische Abschnitt und der Bundkragen 40 des äußeren Insert-Buchsenteils 39 dienen der besseren Verteilung der Flächenpressung in der Verbindungsanordnung 5.3 während des Betriebes des Fahrzeugrades.

Zur Dichtung der Verbindungsanordnung 5.3 überdeckt die dünnwandige Dichtkappe 36 aus Kunststoff den Schraubenkopf 26 der Senkkopf-Verbindungsschraube 21 und den an der Felgenaußenseite 9 erstreckten Bundkragen 40 des äußeren Insert-Buchsenteils 39, wobei diese einen Hohlraum über den felgenaußenseitig erstreckten Teil der Verbindungsanordnung 5.3 bildet. Im Randbereich um den Bundkragen 40 ist der Rand 38 der Dichtkappe 36 mittels einer umlaufenden Verklebung 17 luftdicht mit dem Felgenbett 4.2 verklebt. Die Verklebung 17 kann auf der Felgenaußenseite 9 bzw. auf einer planen Ausfräsung der gekrümmten Oberfläche der Felgenaußenseite 9 des Felgenbetts 4.2 platziert sein, die vorzugsweise im Bereich der überdeckenden Dichtkappe 36 vorgesehen ist, wodurch der auf der Felgenaußenseite 9 erstreckte Teil der Verbindungsanordnung 5.3 und der umlaufende Rand 38 der Dichtkappe 36 bestmöglich am Felgenbett 4.2 anliegt.

Fig. 8 zeigt eine alternative Ausführung der Abstützung der hohl liegenden Dichtkappe 36, die hier durch einen flexiblen Stützkörper 41 vorgesehen ist, der die Dichtkappe 36 gegenüber dem Schraubenkopf 26 der Senkkopf-Verbindungsschraube 21 abstützt. Der flexible Stützkörper 41 aus gummiartigem, elastischem Material auf der Basis von Polyurethan ist separat gefertigt und wird vor der Montage der Dichtkappe 36 in den Hohlraum des Werkzeugeingriffs im Schraubenkopf 26 eingesteckt oder mittels eines flexiblen Klebers eingeklebt.

Die überdeckende, hohl liegende Dichtkappe 36 liegt lose auf dem flexiblen Stützkörper 41 auf. Der zentrisch angeordnete Stützkörper 41 stützt die Dichtkappe 36 mittig ab, so dass eine bestmögliche Last- bzw. Druckverteilung erreicht wird und damit die Wandstärke der Dichtkappe 36 weiter optimiert werden kann.

Die Dichtkappe 36 ist durch ihre lose, schwimmende Auflage weitestgehend vom Stützkörper 41 und vom Schraubenkopf 26 entkoppelt. Durch die lose Auflage und die gummielastische Beschaffenheit des Stützkörpers 41 werden die Mikrobewegungen der Verbindungsanordnung 5.3 nur in einem vernachlässigbar geringem Maße auf die Dichtkappe 36 übertragen. Es treten allenfalls unbedeutende Reibungserscheinungen zwischen Schraubenkopf 26 und Stützkörper 41 sowie zwischen Stützkörper 41 und Dichtkappe 36 auf.

Der vertieft im Hohlraum des Schraubenkopfes 26 liegende Stützkörper 41 ermöglicht eine weitestgehend flache Ausführung der Dichtkappe 36 mit geringer Überhöhung über der Kontur des Felgenbetts 4.2.

Darüber hinaus kann zum Zwecke einer flachen Ausführung der Dichtung auch der Bundkragen 40 des äußeren Insert-Buchsenteils 39 in einer flachen Ausnehmung der Felgenaußenseite 9 des Felgenbetts 4.2 eingelassen sein (nicht dargestellt). Auch die Verklebung 17 zur Abdichtung der Dichtkappe 36 kann in dieser (hier nicht dargestellten)flachen Ausnehmung der Felgenaußenseite 9 vertieft platziert sein, wodurch sich die Überhöhung der Dichtkappe 36 über der Kontur des Felgenbetts 4.2 weiter reduziert.

Die flache Gestaltung und Anordnung der überdeckenden Dichtkappe 36 erleichtert das Aufziehen des Reifens auf die Radfelge, bei dem der Reifen entlang der Kontur des Felgenbetts über die Tiefbettschulter zum Reifensitz rutschen muss. In ihrer flachen Ausführung stellen die Dichtungen umso weniger ein Hindernis beim Aufziehen des Reifens dar.

Diese Ausführung der durch den Stützkörper gestützten Dichtkappe 36 eignet sich ebenfalls für Radkonstruktionen mit höherer Steifigkeit, wie sie beispielsweise bei Sportwagen eingesetzt werden, da bei diesen Radkonstruktionen die im geringeren Maße auftretenden Relativbewegungen in der Verbindungsanordnung sich vernachlässigbar gering auf die flexibel abstützenden Dichtkappen 36 auswirken.

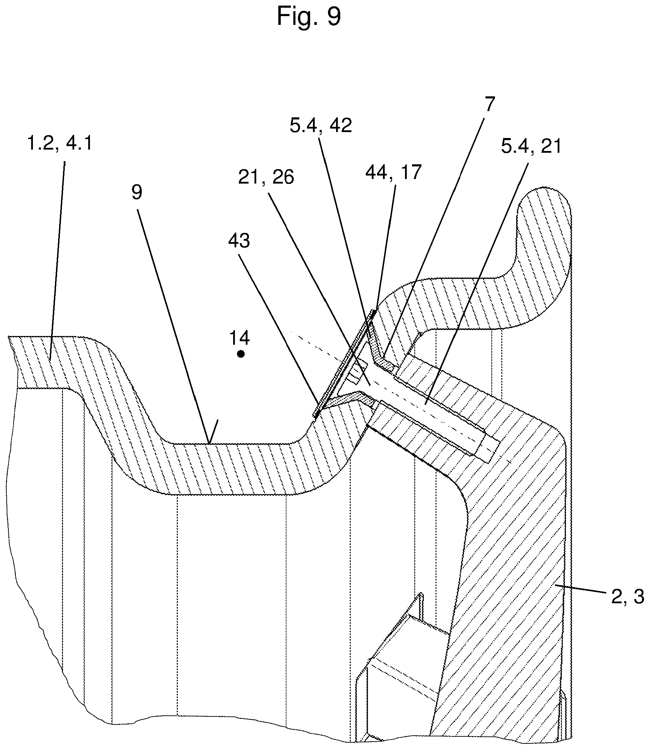

In Fig. 9 ist ein Ausschnitt eines Fahrzeugrades gezeigt, welches eine Radfelge 1.1 mit einem Felgenbett 4.1 aus GFK und die sternförmige Radscheibe 2 mit einer Speicheneinheit 3 aus Edelstahl analog der Ausführung nach Fig. 1 aufweist, die mittels mehrerer Verbindungsanordnungen 5.4 in entsprechender Anzahl der Speichen 3 miteinander verbunden sind.

Die Verbindungsanordnungen 5.4 bestehen jeweils aus der Senckopf-Verbindungsschraube 21 und einem trichterförmigen, äußeren Insert-Buchsenteil 42 mit einem ausgeprägten konischen Abschnitt, welcher ohne einen Bundkragen für die Flächenpressung auskommt.

Das trichterförmige, äußere Insert-Buchsenteil 42 ist derart im Durchgangsloch 7 des Felgenbetts 4.1 angeordnet und in einer entsprechend gefasten Ausnehmung des Felgenbetts 4.1 eingelassen, dass der felgenaußenseitige Rand des trichterförmigen Insert-Buchsenteils 42 bündig mit der Oberfläche der Felgenaußenseite 9 bzw. mit einer Oberfläche der ebenen Ausfräsung der Felgenaußenseite 9 des Felgenbetts 4.1 endet.

Der Schraubenkopf 26 der in das Insert-Buchsenteil 42 eingeschraubten Senkkopf-Verbindungsschraube 21 schließt bündig mit dem felgenaußenseitigen Rand des trichterförmigen Insert-Buchsenteils 42 ab oder bildet, wie in Fig. 9 gezeigt, vorzugsweise eine Vertiefung gegenüber dem felgenaußenseitigen Rand des Insert-Buchsenteils 42.

Der über die Felgenaußenseite erstreckte Teil der Verbindungsanordnung 5.4 kommt somit durchgängig ohne einen Überstand über die Oberfläche der Felgenaußenseite 9 aus, was es ermöglicht eine besonders flach überdeckende Dichtung auszubilden.

Der ausgeprägte konische Abschnitt des Insert-Buchsenteils 42 sorgt für eine besonders gute Übertragung der Flächenpressung in der Verbindungsanordnung 5.4 gegenüber dem Felgenbett 4.1 während des Betriebs des Fahrzeugrades.

Zudem ist dieses Insert-Buchsenteil 42 gegenüber einem Buchsenteil mit Bundkragen einfacher herzustellen.

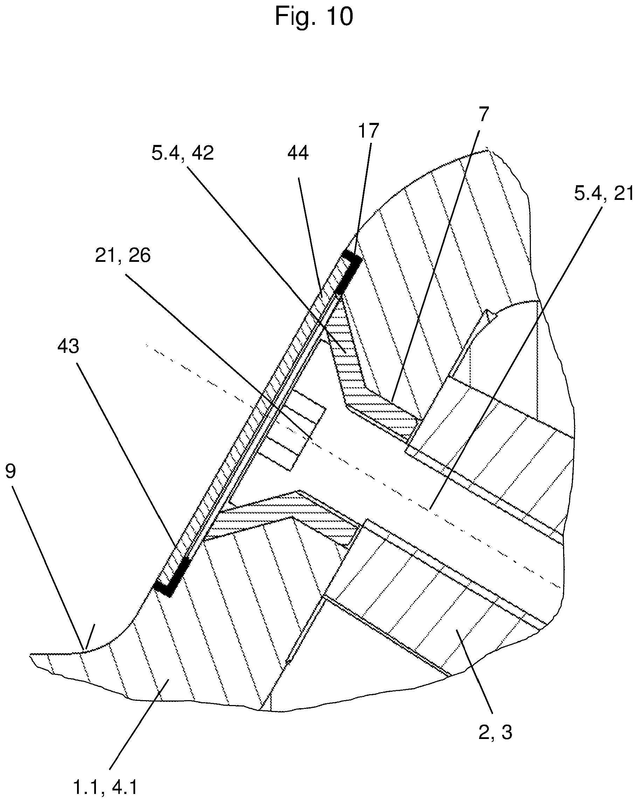

Ein weiterer Vorteil ergibt sich bei einer versenkten Anordnung der Verbindungsanordnung 5.4 im Felgenbett 4.1 gemäß Fig. 10, da die vorzusehende konische Ausnehmung für das trichterförmige Insert-Buchsenteil 42 weitestgehend homogen ausgebildet werden kann und insbesondere keine gesonderte Ausnehmung für einen Bundkragen ausgearbeitet werden muss.

Zur Dichtung der Verbindungsanordnung 5.4 nach Fig. 9 ist eine eben ausgebildete, freitragende Dichtscheibe 43 aus dünnwandigem Stahlblech vorgesehen, die den Schraubenkopf 26 der Senckopf-Verbindungsschraube 21 und den felgenaußenseitige Rand des trichterförmigen Insert-Buchsenteils 42 hohl liegend überspannt, ohne diese Teile zu kontaktieren.

Die freitragende Dichtscheibe 43 aus Stahlblech besitzt eine genügende Eigensteifigkeit, um den anfallenden Drücken in der angrenzenden Reifenkammer 14 Stand zu halten und sich nicht zu verformen.

Im Randbereich um das trichterförmige Insert-Buchsenteil 42 ist ein umlaufender Rand 44 der Dichtscheibe 43 mittels einer Verklebung 17 luftdicht mit dem Felgenbett 4.1 verklebt. Die Verklebung 17 kann auf der Felgenaußenseite 9 bzw. auf der planen Ausfräsung der Felgenaußenseite 9 des Felgenbetts 4.1 platziert sein.

Mit Hilfe einer minimalen Schichthöhe der Verklebung 17, wie in Fig. 9 dargestellt, kann sich die freitragende, ebene

Dichtscheibe 43 hohlliegend über den bündig angeordneten, felgenaußenseitigen Teil der Verbindungsanordnung 5.4 erstrecken - ohne einen unmittelbaren Kontakt mit dem felgenaußenseitigen Teil der Verbindungsanordnung 5.4 zu haben.

Im Zusammenwirken der bündigen Anordnung des felgenaußenseitigen Teils der Verbindungsanordnung 5.4 und der ebenen Geometrie der Dichtscheibe 43 kann die überdeckende Dichtung der Verbindungsanordnung 5.4 noch flacher ausgebildet werden. Die Überhöhungen der Dichtung über der Oberfläche der Felgenaußenseite 9 des Felgenbetts 4.1 sind deutlich weniger ausgeprägt, was die Reifenmontage um ein weiteres erleichtert. Die mechanischen Hindernisse beim Reifenaufziehen entlang des Felgenbetts 4.1 sind weitestgehend minimiert. Die sich infolge der Dichtungshochpunkte ergebenden Spalten zwischen Felgenbett 4.1 und dem Reifenrand, durch die beim druckbeaufschlagtem Reifenaufziehen unerwünscht Luft aus dem Reifeninneren 14 entweichen kann, sind deutlich verringert.

Zudem kann die ebene Dichtscheibe 43 sehr einfach hergestellt werden.

Im Unterschied zur Ausführung nach Fig. 9 ist bei der Ausführung nach Fig. 10 anstelle einer planen Ausfräsung für den ebenen Anschluss des trichterförmigen Insert-Buchsenteils 42 und für die umlaufende ebene Anlage des Randes 44 der Dichtscheibe 43 an die Felgenaußenseite 9 eine flache Ausnehmung der Felgenaußenseite 9 des Felgenbetts 4.1 vorgesehen, an der einerseits das äußere, trichterförmige Buchsenteil 42 abschließt und in der andererseits die ebene Dichtscheibe 43 versenkt angeordnet ist.

Die Ausnehmung ist, wie in Fig. 10 dargestellt, gerade so ausgebildet, dass die in der randseitigen Verklebung 17 eingebettete Dichtscheibe 43 einen Hohlraum zum überdeckten Teil der Verbindungsanordnung 5.4 wahrt und bündig mit der Oberfläche der Felgenaußenseite 9 abschließt, so dass die äußere Kontur der Dichtscheibe 43 weitestgehend formgerecht der Felgenbettkontur folgt.

Bei dieser Ausführung ergeben sich keinerlei Kanten oder Überhöhungen gegenüber der Kontur des Felgenbetts 4.1, so dass bei der Reifenmontage Aufziehhindernisse und ein unerwünschter Druckverlust infolge der Dichtungspunkte gänzlich ausgeschlossen sind.

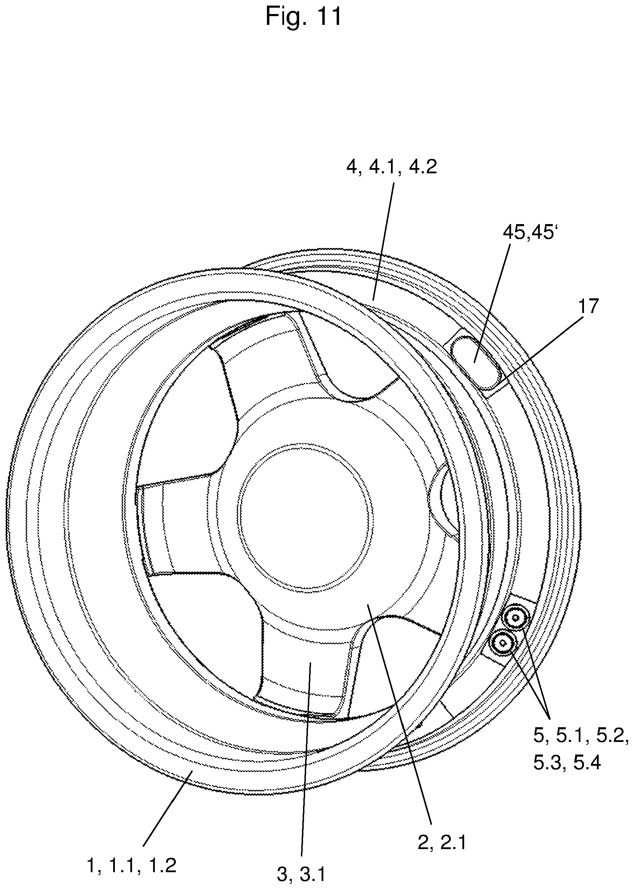

Fig. 11 zeigt ein erfindungsgemäßes Fahrzeugrad, welches entsprechend der vorstehend beschriebenen Ausführungsbeispiele eine beliebige Radfelge 1, 1.1 oder 1.2, mit einem Felgenbett 4, 4.1 oder 4.2 und eine beliebige, sternförmige Radscheibe 2 oder 2.1 mit einer Speicheneinheit 3 bzw. 3.1 aufweist, die mit mehreren, beliebigen Verbindungsanordnungen 5, 5.1, 5.2, 5.3 oder 5.4 verbunden sind.

Bei speziellen Radausführungen, wie z.B. bei einem Fahrzeugrad mit einer Speicheneinheit mit geringer Speichenanzahl oder besonders breiten Speichen, wie abgebildet, kann es zur Gewährleistung einer optimalen Kraftübertragung von der Radscheibe 2 oder 2.1 in das Felgenbett 4, 4.1 oder 4.2 günstig sein, mehrere Verbindungsanordnungen 5, 5.1, 5.2, 5.3 oder 5.4 gruppiert im Eingriff in eine Speiche auszuführen.

In diesem Ausführungsbeispiel sind zur Verbindung der Radscheibe 2 , 2.1 mit dem Felgenbett 4, 4.1, 4.2 jeweils zwei der Verbindungsanordnungen 5, 5.1, 5.2, 5.3 oder 5.4 nah benachbart angeordnet und greifen in ein und dieselbe Speiche 3 bzw. 3.1 ein. Damit ist bezogen auf die Anzahl der Speichen 3 eine doppelte Anzahl an Verbindungsanordnungen 5, 5.1, 5.2, 5.3 oder 5.4 vorgesehen.

Die jeweils in Zweiergruppen benachbart angeordneten Verbindungsanordnungen 5, 5.1, 5.2, 5.3 oder 5.4 sind jeweils gemeinsam durch eine einzige, flach ausgebildete, oval erstreckte Dichtkappe 45 oder Dichtscheibe 45' überdeckt.

Die ovale Dichtkappe 45 bzw. Dichtscheibe 45' überdeckt hohl liegend die über die Felgenaußenseite 9 erstreckten Teile der Verbindungsanordnungen 5, 5.1, 5.2, 5.3 oder 5.4 vollständig und ist im umliegenden Randbereich der gruppierten Verbindungsanordnungen 5, 5.1, 5.2, 5.3 oder 5.4 jeweils mittels einer umlaufenden Verklebung 17 luftdicht mit dem Felgenbett 4, 4.1, 4.2 verklebt.

Eine ebene Ausfräsung der gekrümmt verlaufenden Felgenaußenseite 9 erstreckt sich über den gesamten Bereich der überdeckenden, ovalen Dichtkappe 45 bzw. Dichtscheibe 45', so dass neben den felgenaußenseitig erstreckten Teilen der Verbindungsanordnung 5, 5.1, 5.2, 5.3 oder 5.4 auch die ovalen Dichtkappe 45 bzw. Dichtscheibe 45' plan am Felgenbett 4, 4.1, 4.2 anliegt und die Verbindungsanordnung 5, 5.1, 5.2, 5.3 oder 5.4 zuverlässig gegen das Felgenbett 4, 4.1, 4.2 abdichtet.

Die mehrere Verbindungsanordnungen überdeckende ovale Dichtkappe 45 bzw. Dichtscheibe 45' generiert bei geringem Bauraum eine genügend große Dichtfläche mit den vorstehend beschriebenen Vorteilen der Dichtung.

Diese Ausführung der Dichtung führt zudem zu einer geringen Anzahl von Überhöhungen gegenüber der Oberfläche des Felgenbetts 4, 4.1, 4.2 bzw. zu einer geringen Anzahl von Auflagespalten zwischen dem Reifenrandes des aufzuziehenden Reifens und der Oberfläche des Felgenbetts 4, 4.1, 4.2, was die Reifenmontage ebenfalls erleichtert.

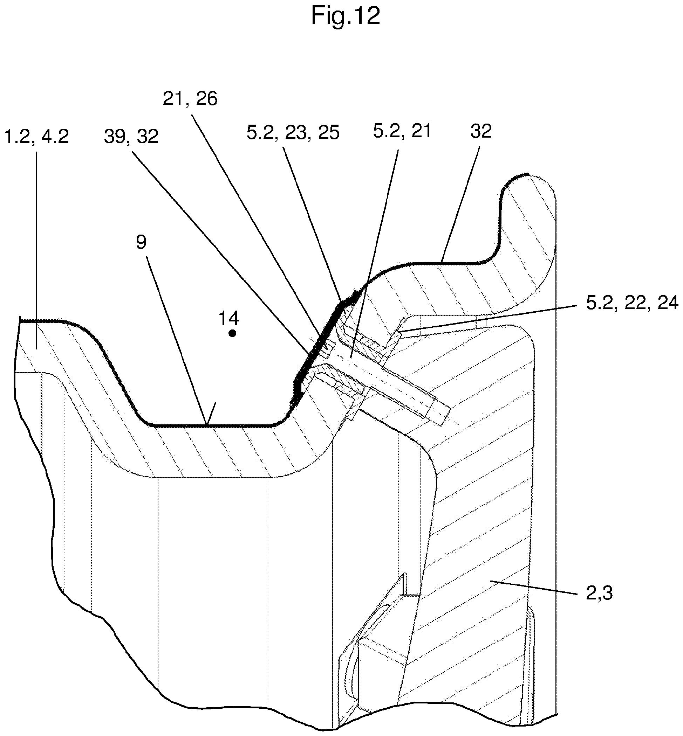

In Fig. 12 ist ein Ausschnitt eines Fahrzeugrades gezeigt, welches eine Radfelge 1.2 mit einem Felgenbett 4.2 aus CFK und die sternförmige Radscheibe 2 mit einer Speicheneinheit 3 aus Edelstahl analog der Ausführung nach Fig. 1 aufweist, die mittels Verbindungsanordnungen 5.2 analog der Ausführung nach der Fig. 3 miteinander verbunden sind.

Der Schraubenkopf 26 der Senkkopf-Verbindungsschraube 21 und der Bundkragen 25 des äußeren Buchsenteils 23 ist mit einer flexiblen Dichtungsschicht 46 überzogen, die im Ausführungsbeispiel zugleich derjenigen Lackschicht 32 entspricht, die auf der Felgenaußenseite 9 der Radfelge 1.2 zur Erhöhung der Luftdichtigkeit des Faserverbundmaterials des Felgenbetts 4.2 ausgebildet ist. Die Dichtungsschicht 46 bzw. Lackschicht 32 ist durchgängig auf der Felgenaußenseite 9 des Felgenbetts 4.2 und den auf der Felgenaußenseite 9 erstreckten Teilen der Verbindungsanordnung 5.2 aufgetragen, wobei die auf der Felgenaußenseite 9 erstreckten Teile der Verbindungsanordnung 5.2 zugleich abgedeckt und luftdicht eingeschlossen werden.

Die Dichtungsschicht 46 bzw. Lackschicht 32 ist im Bereich der auf der Felgenaußenseite 9 erstreckten Teile der Verbindungsanordnung 5.2 bevorzugt dicker ausgebildet.

Damit wird eine gummiartige, zähelastische Dichtungsschicht gebildet, die nicht nur die auf der Felgenaußenseite 9 erstreckten Teile der Verbindungsanordnung 5.2 vollständig gegen den Luftdruck der Reifenkammer 14 dichtet sondern auch die während des Betriebs des Fahrzeugrades auftretenden Mikrobewegungen der Verbindungsanordnung 5.2 gut aufnimmt und kompensiert, ohne dass die Dichtwirkung in irgend einer Weise beeinträchtigt wird.

Mit dieser Ausführung kann neben der vorbeschriebenen vorteilhaften Dichtwirkung eine Minimierung des Fertigungsaufwand erreicht werden, da keine gesonderten Dichtungselemente für die Dichtung der einzelnen oder gruppiert angeordneten Verbindungsanordnungen 5.2 benötigt wird und die Ausbildung der flexiblen Dichtungsschicht 46 in einem Zug mit der Versiegelung 32 des Felgenbetts 4.2 ausgeführt werden kann.

Diese Ausführung eignet sich insbesondere für schwere Radkonstruktionen mit hoher Steifigkeit. Bei diesen Radkonstruktionen treten Mikrobewegungen in der Verbindungsanordnung infolge einer steifer ausgebildeten Radfelge und einer steiferen Radscheibe im besonders geringeren Maße auf, so dass die Auswirkungen auf die überdeckende, flexible Dichtungsschicht 46 entsprechend gering sind und gut von dieser aufgenommen werden.

Im vorliegenden Ausführungsbeispiel ist die relativ steif und schwer beschaffene Radscheibe 2 aus Edelstahl mit einer schweren Ausführung der Radfelge 1.2 kombiniert, deren Felgenbett 4.2 aus CFK eine große Wandstärke und/oder der CFK eine hoher Faserdichte und/oder hochmodulige Fasern von besonders hoher Steifigkeit aufweist.

In einem nicht dargestellten Ausführungsbeispiel kann die flexible Dichtungsschicht 46 auch eine Verbindungsanordnung 5, 5.1, 5.3 oder 5.4 abdecken. Die flexible Dichtungsschicht 46 kann auch hier zugleich diejenige Lackschicht 32 sein, die auf der Felgenaußenseite 9 zur Erhöhung der Luftdichtigkeit des Faserverbundmaterials des Felgenbetts 4, 4.2 ausgebildet ist.

Diese Ausführung eignet sich ebenso für insbesondere schwere Radkonstruktionen mit hoher Steifigkeit, wie vorstehend beschrieben, und für Radkonstruktionen, deren Radfelgen 1 zugleich ein Felgenbett 4 mit verschleißarm ausgebildeten Faserverbundwerkstoff analog dem Felgenbett 4 nach Fig. 1 aufweisen.

### Bezugszeichenliste

- 1: Radfelge .1, .2
- 2: Radscheibe .1
- 3: Speicheneinheit, Speiche .1
- 4: Felgenbett .1, .2
- 5: Verbindungsanordnung .1, .2, .3, .4
- 6: Flachkopf-Verbindungsschraube
- 7: Durchgangsloch
- 8: Schraubenkopf, Flachkopf
- 9: Felgenaußenseite
- 10: Gewindeschaft
- 11: Speichenende
- 12: Stirnfläche
- 13: Felgeninnenseite
- 14: Reifenkammer
- 15: Dichtungselement, freitragende Dichtkappe
- 16: Rand der Dichtkappe
- 17: umlaufende Verklebung
- 18: inneres Insert-Buchsenteil
- 19: Bundkragen
- 20: Anschlussfläche des Bundkragens
- 21: Senkkopf-Verbindungsschraube
- 22: inneres Buchsenteil
- 23: äußeres Buchsenteil
- 24: Bundkragen
- 25: Bundkragen
- 26: Schraubenkopf, Senkkopf
- 27: Anlagefläche
- 28: Gewindeschaft
- 29: Anschlussfläche des Bundkragens
- 30: Dichtungselement, freitragende Dichtkappe
- 31: Rand der Dichtkappe
- 32: Lackschicht
- 33: Dichtungselement, Dichtkappe mit Stegstruktur
- 34: Stegstruktur
- 35: Rand der Dichtkappe
- 36: Dichtungselement, Dichtkappe
- 37: Beschichtung, Füllschicht
- 38: Rand der Dichtkappe
- 39: äußeres Insert-Buchsenteil
- 40: Bundkragen
- 41: flexibler Stützkörper
- 42: trichterförmiges äußeres Insert-Buchsenteil
- 43: Dichtungselement, freitragende Dichtscheibe
- 44: Rand der Dichtscheibe
- 45: Dichtungselement, ovale Dichtkappe, ovale Dichtscheibe
- 46: Dichtungsschicht

## Patentansprüche

1. Fahrzeugrad, das eine Radfelge (1) mit einem Felgenbett (4) aus Faserverbundwerkstoff und eine Radscheibe (2) aufweist, wobei die Radscheibe (2) mittels wenigstens eines Verbindungselements (6, 21) mit der Radfelge (l) verbunden ist, welches durch einen Durchgang des Felgenbetts (4) geführt und in der Radscheibe (2) aufgenommen ist, wobei die Radfelge (1) wenigstens eine Verbindungsanordnung (5) mit wenigstens einem Verbindungselement (6, 21) sowie ein Dichtungselement (15, 30, 33, 36, 43, 45) zur Dichtung gegenüber einer Reifenkammer (14) aufweist, **dadurch gekennzeichnet, dass** das Dichtungselement (15, 30, 33, 36, 43, 45) einen über die Felgenaußenseite (9) des Felgenbetts (4) erstreckten Teil (8, 26, 25, 40, 42) einer oder mehrerer benachbarter Verbindungsanordnungen (5) vollständig und hohl überdeckt und ein umlaufender Rand (16, 31, 35, 38, 44) des Dichtungselements (15, 30, 33, 36, 43, 45) luftdicht mit dem Felgenbett (4) verklebt ist, wobei das Dichtungselement (15, 30, 33, 36, 43, 45) derart formbeständig ausgebildet ist, dass es unter Einwirkung des Druckes der Reifenkammer (14) seine Geometrie im Wesentlichen beibehält.

2. Fahrzeugrad, das eine Radfelge (1) mit einem Felgenbett (4) aus Faserverbundwerkstoff und eine Radscheibe (2) aufweist, wobei die Radscheibe (2) mittels wenigstens eines Verbindungselements (6, 21) mit der Radfelge (1) verbunden ist, welches durch einen Durchgang des Felgenbetts (4) geführt und in der Radscheibe (2) aufgenommen ist, wobei die Radfelge (1) wenigstens eine Verbindungsanordnung (5) mit wenigstens einem Verbindungselement (6, 21) aufweist, **dadurch gekennzeichnet, dass** sie eine flexible Dichtungsschicht (46) aus zähelastischem Kunststoff aufweist, die mittels Beschichtung durchgängig auf der Felgenaussenseite (9) des Felgenbettes (4) und den auf der Felgenaussenseite (9) erstreckenden Teilen der wenigstens einen Verbindungsanordnung (5) aufgetragen ist, wobei die auf der Felgenaußenseite (9) erstreckten Teile der wenigstens einen Verbindungsanordnung (5) zugleich abgedeckt und luftdicht eingeschlossen werden.

3. Fahrzeugrad nach Anspruch 1 oder 2, **dadurch gekennzeichnet, dass** der Rand (16, 31, 35, 38, 44) des Dichtungselements (15, 30, 33, 36, 43, 45) oder der Randbereich der flexiblen Dichtungsschicht (46) mit einer das Felgenbett (4) dichtenden Schicht (32) aus vorzugsweise zähelastischem Kunststoff verklebt ist.

4. Fahrzeugrad nach einem der Ansprüche 1 bis 3, **dadurch gekennzeichnet, dass** das Dichtungselement (15, 30, 33, 36, 43, 45) oder die flexible Dichtungsschicht (46) mit einer das Felgenbett (4) dichtenden Schicht (32) aus vorzugsweise zähelastischem Kunststoff vollständig bedeckt ist.

5. Fahrzeugrad nach einem der Ansprüche 2 bis 4, **dadurch gekennzeichnet, dass** die flexible Dichtungsschicht (46) zugleich eine das Felgenbett (4) dichtende Schicht (32) ist.

6. Fahrzeugrad nach einem der vorhergehenden Ansprüche, **dadurch gekennzeichnet, dass** die Verbindungsanordnung (5) wenigstens ein Buchsenteil (18, 22, 23, 39, 42) aufweist, in welchem das Verbindungselement (6, 21) geführt ist.

7. Fahrzeugrad nach Anspruch 6, **dadurch gekennzeichnet, dass** ein äußeres Buchsenteil (23, 39) der Verbindungsanordnung (5) einen über die Felgenaußenseite (9) erstreckten Bundkragen (25, 40) aufweist.

8. Fahrzeugrad nach Anspruch 6 oder 7, **dadurch gekennzeichnet, dass** das äußere Buchsenteil (42) oder der Bundkragen (25, 40) eine korrespondierende Anlagefläche (27) für den Sitz des Verbindungselements (21) bzw. des über die Felgenaußenseite (9) erstreckten Teils (26) des Verbindungselements (21) aufweist.

9. Fahrzeugrad nach einem der vorhergehenden Ansprüche,
**dadurch gekennzeichnet, dass** der über die Felgenaußenseite (9) des Felgenbetts (4) erstreckte Teil (8, 26, 25, 40, 42) der Verbindungsanordnung (5) in einer Ausnehmung der Felgenaußenseite (9) des Felgenbetts (4) angeordnet ist.

10. Fahrzeugrad nach einem der Ansprüche 1 oder 2 bis 9, **dadurch gekennzeichnet, dass** das Dichtungselement (15, 30, 33, 36, 43, 45) in einer Ausnehmung der Felgenaußenseite (9) des Felgenbetts (4) angeordnet ist.

11. Fahrzeugrad nach einem der Ansprüche 1 oder 3 bis 10, **dadurch gekennzeichnet, dass** das Dichtungselement (15, 30, 33, 36, 43, 45) als eine Dichtkappe (15, 30, 33, 36, 45) ausgebildet ist.

12. Fahrzeugrad nach einem der Ansprüche 1 oder 3 bis 11, **dadurch**
**gekennzeichnet, dass** das Dichtungselement (15, 30, 33, 36, 43, 45) als eine Dichtscheibe (43, 45) ausgebildet ist.

13. Fahrzeugrad nach Anspruch 11 oder 12, **dadurch gekennzeichnet, dass** die Dichtkappe (15, 30, 45) oder die Dichtscheibe (43, 45) freitragend ausgebildet ist.

14. Fahrzeugrad nach einem der Ansprüche 11 bis 13, **dadurch gekennzeichnet, dass** die Dichtkappe (33) oder die Dichtscheibe eine Stegstruktur (34) zur Abstützung auf dem an der Felgenaußenseite (9) erstreckten Teil (25) der Verbindungsanordnung (5) aufweist.

15. Fahrzeugrad nach einem der Ansprüche 11 bis 14, **dadurch gekennzeichnet, dass** ein flexibler Stützkörper zur Abstützung der Dichtkappe (36) oder der Dichtscheibe auf dem an der Felgenaußenseite (9) erstreckten Teil (25) der Verbindungsanordnung (5) vorgesehen ist.

16. Fahrzeugrad nach einem der Ansprüche 11 bis 15, **dadurch gekennzeichnet, dass** die Dichtkappe (36) oder die Dichtscheibe auf einer der Felgenaußenseite (9) zugewandten Seite eine flexible Füllschicht (37) aufweist.

17. Fahrzeugrad nach einem Ansprüche 6 bis 15, **dadurch gekennzeichnet, dass** ein inneres Buchsenteil (18, 22) der Verbindungsanordnung (5) einen über die Felgeninnenseite (13) des Felgenbetts (4) erstreckten Bundkragen (19, 24) aufweist.

18. Fahrzeugrad nach Anspruch 17, **dadurch gekennzeichnet, dass** der Bundkragen (19, 24) eine korrespondierende Anschlussfläche (20, 29) für den Sitz einer Anschlussfläche (12) der Radscheibe (2) aufweist.

19. Fahrzeugrad nach Anspruch 17 oder 18, **dadurch gekennzeichnet, dass** der Bundkragen (19, 24) einen Überstand über der Kontur der Felgeninnenseite (13) des Felgenbetts (4) aufweist.

20. Fahrzeugrad nach einem der Ansprüche 6 bis 19, **dadurch gekennzeichnet, dass** mehrere Buchsenteile (22, 23) der Verbindungsanordnung (5) ineinandergreifend angeordnet sind.

## Claims

1. Vehicle wheel comprising a wheel rim (1) with a rim base (4) of fibre composite material and a wheel disc (2), the wheel disc (2) being connected to the wheel rim (1) by means of at least one connecting element (6, 21) which is guided through a passage in the rim base (4) and is received by the wheel disc (2), wherein the wheel rim (1) has at least one connecting arrangement (5) with at least one connecting element (6, 21) as well as a sealing element (15, 30, 33, 36, 43, 45) for sealing against a tyre chamber (14), **characterised in that in that** the sealing element (15, 30, 33, 36, 43, 45) covers in a complete and hollow manner a part (8, 26, 25, 40, 42) of one or more neighbouring connecting arrangements (5) which extends across the rim outer side (9) of the rim base (4) and a circumferential edge (16, 31, 35, 38, 44) of the sealing element (15, 30, 33, 36, 43, 45) is glued to the rim base (4) in an airtight manner, wherein the sealing element (15, 30, 33, 36, 43, 45) is formed to be dimensionally stable in such a way that it essentially retains its geometry under the effect of the pressure of the tyre chamber (14).

2. Vehicle wheel comprising a wheel rim (1) with a rim base (4) made of fibre composite material and a wheel disc (2), the wheel disc (2) being connected to the wheel rim (1) by means of at least one connecting element (6, 21) which is guided through a passage in the rim base (4) and is received by the wheel disc (2), the wheel rim (1) comprising at least one connecting arrangement (5) with at least one connecting element (6, 21), **characterised in that** it comprises a flexible sealing layer (46) made of viscoplastic plastic, which is applied by means of a coating continuously on the rim outer side (9) of the rim base (4) and the parts of the at least one connecting arrangement (5) extending across the rim outer side (9), wherein the parts of the at least one connecting arrangement (5) that extend across the rim outer side (9) are simultaneously covered and enclosed in an airtight manner.

3. Vehicle wheel according to claim 1 or 2, **characterised in that** the edge (16, 31, 35, 38, 44) of the sealing element (15, 30, 33, 36, 43, 45) or the edge region of the flexible sealing layer (46) is glued to a layer (32) of preferably viscoplastic plastic that seals the rim base (4).

4. Vehicle wheel according to one of claims 1 to 3, **characterised in characterised in that** the sealing element (15, 30, 33, 36, 43, 45) or the flexible sealing layer (46) is completely covered with a layer (32) of preferably viscoplastic plastic that seals the rim base (4).

5. Vehicle wheel according to one of claims 2 to 4, **characterised in that** the flexible sealing layer (46) is simultaneously a layer (32) that seals the rim base (4).

6. Vehicle wheel according to one of the preceding claims, **characterised in that** the connecting arrangement (5) comprises at least one bushing component (18, 22, 23, 39, 42) in which the connecting element (6, 21) is guided.

7. Vehicle wheel according to claim 6, **characterised in that** an outer bushing component (23, 39) of the connecting arrangement (5) comprises a flange collar (25, 40) that extends across the rim outer side (9).

8. Vehicle wheel according to claim 6 or 7, **characterised in that** the outer bushing component (42) or the flange collar (25, 40) comprises a corresponding contact surface (27) for the seating of the connecting element (21) or of the part (26) of the connecting element (21) which extends across the rim outer side (9).

9. Vehicle wheel according to one of the preceding claims, **characterised in that** the part (8, 26, 25, 40, 42) of the connecting arrangement (5) that extends across the rim outer side (9) of the rim base (4) is arranged in a recess in the rim outer side (9) of the rim base (4).

10. Vehicle wheel according to one of claims 1 or 2 to 9, **characterised in that** the sealing element (15, 30, 33, 36, 43, 45) is arranged in a recess in the rim outer side (9) of the rim base (4).

11. Vehicle wheel according to one of claims 1 or 3 to 10, **characterised in that** the sealing element (15, 30, 33, 36, 43, 45) is in the form of a sealing cap (15, 30, 33, 36, 45).

12. Vehicle wheel according to one of claims 1 or 3 to 11, **characterised in that** the sealing element (15, 30, 33, 36, 43, 45) is formed as a sealing disc (43, 45).

13. Vehicle wheel according to claim 11 or 12, **characterised in that** the sealing cap (15, 30, 45) or the sealing disc (43, 45) is self-supporting.

14. Vehicle wheel according to one of claims 11 to 13, **characterised in that** the sealing cap (33) or the sealing disc has a web structure (34) for support on the part (25) of the connecting arrangement (5) that extends on the rim outer side (9).

15. Vehicle wheel according to one of claims 11 to 14, **characterised in that** a flexible supporting body for support of the sealing cap (36) or the sealing disc is provided on the part (25) of the connecting arrangement (5) that extends on the rim outer side (9).

16. Vehicle wheel according to one of claims 11 to 15, **characterised in that** the sealing cap (36) or the sealing disc comprises a flexible filling layer (37) on a side facing the rim outer side (9).

17. Vehicle wheel according to one of claims 6 to 15, **characterised in that** an inner bushing component (18, 22) of the connecting arrangement (5) comprises a flange collar (19, 24) that extends across the rim inner side (13) of the rim base (4).

18. Vehicle wheel according to claim 17, **characterised in that** the flange collar (19, 24) comprises a corresponding connecting surface (20, 29) for the seating of a connecting surface (12) of the wheel disc (2).

19. Vehicle wheel according to claim 17 or 18, **characterised in that** the flange collar (19, 24) comprises a protrusion above the contour of the rim inner side (13) of the rim base (4).

20. Vehicle wheel according to one of claims 6 to 19, **characterised in that** several bushing components (22, 23) of the connecting arrangement (5) are arranged so as to be interlocking.

## Revendications

1. Roue de véhicule, qui présente une jante (1) avec un creux de jante (4) en matériau renforcé par des fibres et un disque de roue (2), le disque de roue (2) étant relié à la jante (1) au moyen d'au moins un élément de liaison (6, 21), qui passe à travers un passage du creux de jante (4) et est logé dans le disque de roue (2), la jante (1) présentant au moins un agencement de liaison (5) avec au moins un élément de liaison (6, 21) ainsi qu'un élément d'étanchéité (15, 30, 33, 36, 43, 45) pour assurer l'étanchéité par rapport à une chambre de pneu (14), **caractérisée en ce que** l'élément d'étanchéité (15, 30, 33, 36, 43, 45) recouvre complètement et de manière creuse une partie (8, 26, 25, 40, 42) d'un ou de plusieurs agencements de liaison (5) voisins s'étendant sur le côté extérieur (9) de la jante du creux de jante (4), et un bord périphérique (16, 31, 35, 38, 44) de l'élément d'étanchéité (15, 30, 33, 36, 43, 45) est collé de manière étanche à l'air avec le creux de jante (4), l'élément d'étanchéité (15, 30, 33, 36, 43, 45) étant réalisé de manière à conserver sa forme de telle sorte qu'il conserve sensiblement sa géométrie sous l'effet de la pression de la chambre de pneu (14).

2. Roue de véhicule, qui présente une jante (1) avec un creux de jante (4) en matériau renforcé par des fibres et un disque de roue (2), le disque de roue (2) étant relié à la jante (1) au moyen d'au moins un élément de liaison (6, 21), qui passe à travers un passage du creux de jante (4) et est logé dans le disque de roue (2), la jante (1) présentant au moins un agencement de liaison (5) avec au moins un élément de liaison (6, 21), **caractérisée en ce qu'**elle présente une couche d'étanchéité flexible (46) en plastique viscoplastique, qui est appliquée au moyen d'un revêtement de manière continue sur le côté extérieur (9) de la jante du creux de jante (4) et sur les parties de l'au moins un agencement de liaison (5) s'étendant sur le côté extérieur (9) de la jante, les parties de l'au moins un agencement de liaison (5) s'étendant sur le côté extérieur (9) de la jante étant en même temps recouvertes et enfermées de manière étanche à l'air.

3. Roue de véhicule selon la revendication 1 ou 2, **caractérisée en ce que** le bord (16, 31, 35, 38, 44) de l'élément d'étanchéité (15, 30, 33, 36, 43, 45) ou la zone de bord de la couche d'étanchéité flexible (46) est collée à une couche (32) rendant étanche le creux de jante (4), de préférence en plastique viscoplastique.

4. Roue de véhicule selon l'une des revendications 1 à 3, **caractérisée en ce que** l'élément d'étanchéité (15, 30, 33, 36, 43, 45) ou la couche d'étanchéité flexible (46) est complètement recouverte avec une couche (32) rendant étanche le creux de jante (4), de préférence en plastique viscoplastique.

5. Roue de véhicule selon l'une des revendications 2 à 4, **caractérisée en ce que** la couche d'étanchéité flexible (46) est également une couche (32) rendant étanche le creux de jante (4).

6. Roue de véhicule selon l'une des revendications précédentes, **caractérisée en ce que** l'agencement de liaison (5) comporte au moins une partie de prise (18, 22, 23, 39, 42) dans laquelle est guidé l'élément de liaison (6, 21).

7. Roue de véhicule selon la revendication 6, **caractérisée en ce qu'**une partie de prise extérieure (23, 39) de l'agencement de liaison (5) présente un collet (25, 40) s'étendant sur le côté extérieur (9) de la jante.

8. Roue de véhicule selon la revendication 6 ou 7, **caractérisée en ce que** la partie de prise extérieure (42) ou le collet (25, 40) présente une surface d'appui (27) correspondante pour le logement de l'élément de liaison (21) ou de la partie (26) de l'élément de liaison (21) s'étendant sur le côté extérieur (9) de la jante.

9. Roue de véhicule selon l'une des revendications précédentes, **caractérisée en ce que** la partie (8, 26, 25, 40, 42) de l'agencement de liaison (5) s'étendant sur le côté extérieur (9) de la jante du creux de jante (4) est disposée dans un évidement du côté extérieur (9) de la jante du creux de jante (4).

10. Roue de véhicule selon l'une des revendications 1 ou 2 à 9, **caractérisée en ce que** l'élément d'étanchéité (15, 30, 33, 36, 43, 45) est disposé dans un évidement du côté extérieur (9) de la jante du creux de jante (4).

11. Roue de véhicule selon l'une des revendications 1 ou 3 à 10, **caractérisée en ce que** l'élément d'étanchéité (15, 30, 33, 36, 43, 45) est conçu comme un capuchon d'étanchéité (15, 30, 33, 36, 45).

12. Roue de véhicule selon l'une des revendications 1 ou 3 à 11, **caractérisé en ce que** l'élément d'étanchéité (15, 30, 33, 36, 43, 45) est réalisé sous la forme d'un disque d'étanchéité (43, 45).

13. Roue de véhicule selon la revendication 11 ou 12, **caractérisée en ce que** le capuchon d'étanchéité (15, 30, 45) ou le disque d'étanchéité (43, 45) est réalisé en porte-à-faux.

14. Roue de véhicule selon l'une des revendications 11 à 13, **caractérisée en ce que** le capuchon d'étanchéité (33) ou le disque d'étanchéité présente une structure d'entretoises (34) destinée à prendre appui sur la partie (25) s'étendant sur le côté extérieur (9) de la jante de l'agencement de liaison (5).

15. Roue de véhicule selon l'une des revendications 11 à 14, **caractérisée en ce qu'**un corps d'appui flexible est prévu pour soutenir le capuchon d'étanchéité (36) ou le disque d'étanchéité sur la partie (25) s'étendant sur le côté extérieur (9) de la jante de l'agencement de liaison (5).

16. Roue de véhicule selon l'une des revendications 11 à 15, **caractérisée en ce que** le capuchon d'étanchéité (36) ou le disque d'étanchéité présente une couche de remplissage flexible (37) sur un côté tourné vers le côté extérieur (9) de la jante.

17. Roue de véhicule selon l'une des revendications 6 à 15, **caractérisée en ce qu'**une partie de prise interne (18, 22) de l'agencement de liaison (5) présente un collet (19, 24) s'étendant sur le côté intérieur (13) de la jante du creux de jante (4).

18. Roue de véhicule selon la revendication 17, **caractérisée en ce que** le collet (19, 24) présente une surface de raccordement correspondante (20, 29) pour le logement d'une surface de raccordement (12) du disque de roue (2).

19. Roue de véhicule selon la revendication 17 ou 18, **caractérisée en ce que** le collet (19, 24) présente une saillie par rapport au contour du côté intérieur (13) du de la jante du creux de jante (4).

20. Roue de véhicule selon l'une quelconque des revendications 6 à 19, **caractérisée en ce que** plusieurs parties de prise (22, 23) de l'agencement de liaison (5) sont agencées de manière à s'emboîter les unes dans les autres.
